# EUROPEAN PATENT APPLICATION

(11) **EP 4 624 070 A1**
(43) Date of publication of application: **01.10.2025**
(21) Application number: 23894510.9
(22) Date of filing: 16.11.2023
(51) Int. Cl.: B22F 1/00, B22F 1/10, B22F 1/0545, B22F 9/00, C09J 9/02, H01B 1/22

(54) **COPPER NANOPARTICLE-CONTAINING COMPOSITION**

(30) Priority: 24.11.2022 WO PCT/JP2022/043409
(71) Applicant: Kao Corporation, Chuo-ku, Tokyo 103-8210 (JP)
(72) Inventor: EYAMA Takaaki, Wakayama-shi, Wakayama 640-8580 (JP); SUZUKI Ukyo, Wakayama-shi, Wakayama 640-8580 (JP); MUTO Kosuke, Wakayama-shi, Wakayama 640-8580 (JP)
(74) Representative: Hoffmann Eitle
(86) International application number: PCT/JP2023/041276
(87) International publication number: WO 2024/111501

(57) **Abstract**

The present invention relates to: a copper nanoparticle-containing composition containing copper nanoparticles A, a monocarboxylic acid B, and an organic solvent C, wherein the monocarboxylic acid B has 5 or more and 12 or less carbons, and the monocarboxylic acid B has one or more functional groups or bonds selected from the group consisting of a hydroxy group, a ketonic carbonyl group, and an ether bond; a method for producing a bonded body using the copper nanoparticle-containing composition; and a bonded body or an electronic device using the copper nanoparticle-containing composition.

## Description

### Technical Field

The present invention relates to a copper nanoparticle-containing composition, a method for producing a bonded body using the copper nanoparticle-containing composition, and a bonded body or an electronic device using the copper nanoparticle-containing composition.

### Background Art

Copper has excellent electrical conductivity and thus is widely used, for example, as a wiring material.

In addition, copper also has excellent thermal conductivity and thus is also used as a heat transfer material, a heat exchange material, a heat dissipation material, and the like. Furthermore, it may be used as a bonding material for bonding materials to each other by taking advantage of such characteristics.

In recent years, semiconductors called power devices have become increasingly important as power conversion and control devices, such as inverters. Unlike semiconductors for information processing, such as memories and microprocessors, power devices are used to control a large current and generate a large amount of heat during operation. Thus, a bonding material used for mounting a power device is required to have heat resistance in addition to bonding strength. However, lead-free solders, which are widely used in bonding materials these days, have a drawback of low heat resistance. To overcome these problems, various techniques have been proposed, in which a metal fine particle dispersion is used instead of solder, applied to objects by a coating means of various types, and fired to bond the objects to be bonded. And a metal fine particle dispersion, in which metal fine particles are dispersed in a dispersion medium, has been proposed as a composition used for mounting. Silver or copper is mainly used as the metal species of the metal fine particle dispersion. Silver has no oxide film at room temperature (25°C). Thus, a silver fine particle dispersion is fired without a reducing agent to form a continuum of silver and to bond objects to be bonded. On the other hand, copper has a stable oxidation state at room temperature (25°C) and thus contains a copper atom in an oxidation state. Thus, to bond objects to be bonded using a copper fine particle dispersion, a copper atom in oxidation state needs to be reduced and fired to form a continuum of copper.

For the purpose of providing a copper paste with high bonding strength with an object to be bonded, JP 2020-053404 A (Patent Literature 1) describes a copper paste containing a copper powder and a liquid medium, in which the liquid medium contains a polyethylene glycol, and copper particles constituting the copper powder have an average primary particle size of 0.03 µm or greater and 1.0 µm or less, the surface of the copper particles is coated with a fatty acid having from 6 or more and 18 or less carbons, and a crystallite size of (111) plane of the copper particles is 50 nm or less, and a mass ratio of the copper powder in the copper paste is 50% or greater and 99% or less.

For the purpose of providing a composition for bonding, the composition for obtaining a bonding layer with high bonding strength, WO 2018/030173 (Patent Literature 2) describes a composition for bonding, the composition containing silver nanoparticles, a dispersion medium, and a first carboxylic acid, the first carboxylic acid being attached to at least part of the surface of the silver nanoparticles and containing an oxygen atom in a carbon chain.

For the purpose of providing a method for producing copper nanoparticles achieving both oxidation resistance and bondability, JP 2010-189681 A (Patent Literature 3) describes a method for producing copper nanoparticles having a predetermined step of producing copper nanoparticles having citric acid on the surface and describes a bonding method using the copper nanoparticles produced by the production method.

### Summary of Invention

The present invention relates to:
a copper nanoparticle-containing composition containing copper nanoparticles A, a monocarboxylic acid B, and an organic solvent C, in which
the monocarboxylic acid B has 5 or more and 12 or less carbons, and
the monocarboxylic acid B has one or more functional groups or bonds selected from the group consisting of a hydroxy group, a ketonic carbonyl group, and an ether bond;
a method for producing a bonded body using the copper nanoparticle-containing composition; and
a bonded body or an electronic device using the copper nanoparticle-containing composition.

### Description of Embodiments

Metal fine particle dispersions that have been proposed as bonding materials as alternatives to solder to date have higher heat resistance than solder but still have room for improvement in terms of bonding strength with an object to be bonded. In addition, the driving temperature of recent power devices tends to increase and is said to reach 250°C. Bonded bodies using a silver fine particle dispersion in the art do not have sufficient heat resistance in an environment of 250°C and may have caused a reduction in bonding strength. Furthermore, copper fine particle dispersions in the art may have caused poor bonding strength in the resulting bonded body depending on the storage period of the copper fine particle dispersions. Thus, such silver fine particle dispersions with poor heat resistance in an environment of 250°C and copper fine particle dispersions with poor storage stability are difficult to use for mounting next-generation power devices.

In addition, wiring in electronic devices has been mainly formed by copper plating to date. However, copper plating discharges a large amount of harmful liquid waste and thus increases the environmental load. Thus, metal fine particle dispersions have been proposed also as compositions for forming wiring of electronic devices. Wiring can be formed simply by printing and firing the metal fine particle dispersion at a desired position for wiring, thus resulting in little waste and being able to significantly reduce the environmental load. For forming wiring of electronic devices, silver fine particle dispersions have been proposed. However, significant electromigration may occur in case of silver, and thus the use of silver may pose a problem in that a short circuit may occur when fine wiring is formed using a silver fine particle dispersion and an electrical current is passed through such a fine wiring. On the other hand, electromigration occurs in copper to a lesser degree compared to silver, and thus copper fine particle dispersions have been commonly used in forming wiring of electronic devices. However, copper fine particle dispersions may have increased resistivity depending on the storage period, resulting in reduction in the electrical conductivity.

When the copper paste described in Patent Literature 1, in which copper particles coated with a hydrophobic fatty acid are dispersed in a hydrophilic polyethylene glycol, was stored for one month and then used to produce a bonded body, poor bonding strength was observed in the resulting bonded body. In addition, it was found that forming wiring by printing and firing using the copper paste after one month of storage increased the resistivity and reduced the electrical conductivity. These phenomena are considered to be caused by poor dispersion of the copper particles in the copper paste.

The composition for bonding described in Patent Literature 2 containing silver nanoparticles with a surface to which a first carboxylic acid containing an oxygen atom in a carbon chain is attached, has excellent bonding strength and storage stability. However, the resulting bonded body had reduced bonding strength in an environment of 250°C and was observed to have poor heat resistance. In addition, when this silver paste was used and printed in a comb shape with a line and space (L/S) of 400 µm/400 µm and fired to form wiring and then a current was passed under high humidity, it was found that a short circuit occurred.

The bonding method using copper nanoparticles having citric acid on the surface described in Patent Literature 3 had difficulty removing citric acid that protected the copper nanoparticles during firing, and the resulting bonded body was observed to have poor bonding strength.

Thus, there are demands for further improvements in dispersion stability of metal fine particles in a metal fine particle dispersion formed by dispersing metal fine particles in a dispersion medium; storage stability of the metal fine particle dispersion; bondability and electrical conductivity by firing at 200°C or higher and 300°C or lower, which is firing under conditions of low temperature in bonding or wiring formation using metal fine particles; and heat resistance of a bonded body when the bonded body is held in an environment of 250°C for a long period.

The present invention relates to a copper nanoparticle-containing composition which: exhibits excellent bondability and electrical conductivity when fired at 200°C or higher and 300°C or lower, which is a low temperature for bonding or wiring formation using metal fine particles; is capable of producing a bonded body exhibiting high bonding strength and an electrically conductive structure exhibiting excellent electrical conductivity, even after a certain period of storage; and is capable of producing a bonded body with excellent heat resistance when the bonded body is held in an environment of 250°C for a long period. And the present invention also relates to a method for producing a bonded body using the copper nanoparticle-containing composition; and a bonded body or an electronic device using the copper nanoparticle-containing composition.

The present inventors have found that a copper nanoparticle-containing composition can be provided by dispersing copper nanoparticles in an organic solvent, by a monocarboxylic acid having 5 or more and 12 or less carbons and having one or more functional groups or bonds selected from the group consisting of a hydroxy group, a ketonic carbonyl group, and an ether bond. Such a copper nanoparticle-containing composition has improved dispersion stability of the copper nanoparticles in the copper nanoparticle-containing composition and in turn storage stability of the copper nanoparticle-containing composition is improved. Also such a copper nanoparticle-containing composition has excellent bondability and electrical conductivity when fired at 200°C or higher and 300°C or lower, which is a low temperature for bonding or wiring formation using metal fine particles, and is capable of producing a bonded body with high bonding strength and an electrically conductive structure with excellent electrical conductivity even after a certain period of storage. The resulting bonded body also has excellent heat resistance when the bonded body is held in an environment of 250°C for a long period. The present inventors also have found that a method for producing a bonded body using the copper nanoparticle-containing composition and a bonded body or an electronic device using the copper nanoparticle-containing composition can be provided.

That is, the present invention relates to the following [1] to [6].
[1] A copper nanoparticle-containing composition containing copper nanoparticles A, a monocarboxylic acid B, and an organic solvent C, in which
   the monocarboxylic acid B has 5 or more and 12 or less carbons, and
   the monocarboxylic acid B has one or more functional groups or bonds selected from the group consisting of a hydroxy group, a ketonic carbonyl group, and an ether bond.
[2] A method for producing a bonded body, the method including a step of interposing the copper nanoparticle-containing composition described in [1] above between a plurality of members to be bonded and firing the composition, in which
   at least one of the members to be bonded is a metal plate, and
   the step includes holding the metal plate at a temperature of 200°C or higher for 30 seconds or more to sinter at least the copper nanoparticles A.
[3] A bonded body having a bonding layer interposed between a plurality of members to be bonded, in which
   the bonding layer includes a sintered body of the copper nanoparticle-containing composition described in [1] above.
[4] An electronic device containing an electrically conductive structure including a sintered body of the copper nanoparticle-containing composition described in [1] above.
[5] Use of the copper nanoparticle-containing composition described in [1] above, for bonding a plurality of members to be bonded.
[6] Use of the copper nanoparticle-containing composition described in [1] above, for an electrically conductive structure of an electronic device.

According to the present invention, there can be provided the copper nanoparticle-containing composition which exhibits excellent bondability and electrical conductivity when fired at 200°C or higher and 300°C or lower, which is a low temperature for bonding or wiring formation using metal fine particles, and is capable of producing a bonded body having high bonding strength and an electrically conductive structure with excellent electrical conductivity even after a certain period of storage. And the resulting bonded body exhibits excellent heat resistance when the bonded body is held in an environment of 250°C for a long period. There can be also provided the method for producing a bonded body using the copper nanoparticle-containing composition; and the bonded body or the electronic device using the copper nanoparticle-containing composition.

### Copper Nanoparticle-Containing Composition

A copper nanoparticle-containing composition according to an embodiment of the present invention contains copper nanoparticles A, a monocarboxylic acid B, and an organic solvent C, in which the monocarboxylic acid B has 5 or more and 12 or less carbons, and the monocarboxylic acid B has one or more functional groups or bonds selected from the group consisting of a hydroxy group, a ketonic carbonyl group, and an ether bond. In the copper nanoparticle-containing composition according to an embodiment of the present invention, the copper nanoparticles A are preferably dispersed in the organic solvent C by the monocarboxylic acid B using the organic solvent C as a dispersion medium.

In the present description, "sinterability under low temperature" means that metal sintering occurs at 200°C or higher and 300°C or lower and is also referred to as "low-temperature sinterability". "Bondability when fired at a low temperature" means bondability between a plurality of members to be bonded by metal sintering in firing at 200°C or higher and 300°C or lower and is also referred to as "low-temperature bondability". In addition, "electrical conductivity by firing under low temperature" means electrical conductivity by metal sintering in firing at 200°C or higher and 300°C or lower and is also referred to as "low-temperature electrical conductivity".

Furthermore, in the present description, bondability of a bonded body obtained by firing at 200°C or higher and 300°C or lower using a copper nanoparticle-containing composition stored for one month in an environment of 25°C and a humidity of 50% is referred to as "bondability after storage". Moreover, electrical conductivity of an electrically conductive structure obtained by firing at 200°C or higher and 300°C or lower using a copper nanoparticle-containing composition stored for one month in an environment of 25°C and a humidity of 50% is referred to as "electrical conductivity after storage".

Still more, bondability of a bonded body obtained using the copper nanoparticle-containing composition, the bondability of the bonded body after storage in an environment of 250°C for 1000 hours, is also referred to as "250°C heat resistance".

According to the present invention, the following effects are achieved: bondability and electrical conductivity when fired at a low temperature is excellent; a bonded body obtained using the copper nanoparticle-containing composition after storage for a certain period of time has high bonding strength; an electrically conductive structure obtained using the copper nanoparticle-containing composition after storage for a certain period of time has excellent electrical conductivity; and furthermore the bonded body with excellent 250°C heat resistance can be obtained. The reason for that is not clear but is surmised as follows.

The copper nanoparticle-containing composition according to an embodiment of the present invention contains copper nanoparticles A, a monocarboxylic acid B, and an organic solvent C. In the copper nanoparticle-containing composition, the copper nanoparticles A are dispersed in the organic solvent C by the monocarboxylic acid B. The monocarboxylic acid B has 5 or more carbons and thus has steric repulsive force, and the monocarboxylic acid B has a carboxy group and one or more functional groups or bonds selected from the group consisting of a hydroxy group, a ketonic carbonyl group, and an ether bond and thus has affinity to the copper nanoparticles A. Thus, the steric repulsive force and the affinity to the copper nanoparticles A are considered to allow the carboxy group to effectively exhibit electrostatic repulsive force and suppress aggregation of the copper nanoparticles A in the copper nanoparticle-containing composition and to contribute to improvement of the dispersion stability of the copper nanoparticles A in the copper nanoparticle-containing composition and the storage stability of the copper nanoparticle-containing composition. In addition, the monocarboxylic acid B has 12 or less carbons and has one or more functional groups or bonds selected from the group consisting of a hydroxy group, a ketonic carbonyl group, and an ether bond. Thus, this presumably facilitates movement of the monocarboxylic acid B on the surface of the copper nanoparticles A. Thus, this facilitates exposure of copper atoms on the surface of the copper nanoparticles A, and formation of a metallic bond, thereby to allow necking formation between copper atoms by low-temperature sintering to proceed, and improve low-temperature bondability and low-temperature electrical conductivity. Furthermore, it is considered that even after storing the copper nanoparticle-containing composition for a certain period, a bonded body with high bonding strength and an electrically conductive structure with excellent electrical conductivity can be obtained.

Moreover, though fine voids are present in a bonding layer of a bonded body obtained by firing the copper nanoparticle-containing composition according to an embodiment of the present invention, an amount of the monocarboxylic acid B remaining in the voids can be reduced, since the monocarboxylic acid B has 12 or less carbons and has one or more functional groups or bonds selected from the group consisting of a hydroxy group, a ketonic carbonyl group, and an ether bond. As a result, enlargement of the voids caused by repeated sintering due to re-oxidation and re-reduction of copper by the remaining monocarboxylic acid B even in an environment of 250°C can be suppressed, a change in the bonding layer of the bonded body is less likely to occur, and also the 250°C heat resistance can be improved.

### Copper Nanoparticles A

**In** an embodiment of the present invention, the copper nanoparticles A (hereinafter also referred to simply as "the copper nanoparticles A") are an ensemble of ultra fine particles of copper and refer to copper nanoparticles A with an average particle size of 500 nm or less. The copper nanoparticles A hold the monocarboxylic acid B described later on the surface of the copper nanoparticles A and thus are dispersed in the organic solvent C. The monocarboxylic acid B is considered to have an effect of suppressing aggregation of the copper nanoparticles A in the copper nanoparticle-containing composition. **In** other words, the monocarboxylic acid B is considered to function as a dispersant for the copper nanoparticles A.

From the viewpoint of improving the low-temperature sinterability, low-temperature bondability, and low-temperature electrical conductivity, the average particle size of the copper nanoparticles A is preferably 150 nm or greater, more preferably 170 nm or greater, even more preferably 190 nm or greater, and still more preferably 200 nm or greater. In addition, from the viewpoint of improving the dispersion stability and storage stability of the copper nanoparticle-containing composition to improve the low-temperature bondability and low-temperature electrical conductivity as well as the bondability and electrical conductivity after storage, the average particle size is preferably 300 nm or less, more preferably 260 nm or less, even more preferably 250 nm or less, still more preferably 240 nm or less, and yet more preferably 230 nm or less. With these viewpoints taken together, the average particle size of the copper nanoparticles A is preferably 150 nm or greater and 300 nm or less, more preferably 170 nm or greater and 300 nm or less, even more preferably 170 nm or greater and 260 nm or less, still more preferably 190 nm or greater and 250 mm or less, yet more preferably 190 nm or greater and 240 nm or less, and still even more preferably 200 nm or greater and 230 nm or less.

In an embodiment of the present invention, even though the copper nanoparticles A contain a particle with a particle size of 500 nm or greater, the effects of the present invention can be exhibited as long as the average particle size of the copper nanoparticles A is 500 nm or less.

The average particle size of the copper nanoparticles A is measured by the method described in Examples.

From the viewpoint of improving the low-temperature bondability and low-temperature electrical conductivity as well as the bondability and electrical conductivity after storage, the content of the copper nanoparticles A in the copper nanoparticle-containing composition according to an embodiment of the present invention is preferably 30 mass% or greater, more preferably 40 mass% or greater, even more preferably 50 mass% or greater, and still more preferably 55 mass% or greater. In addition, from the viewpoint of improving the dispersion stability and storage stability of the copper nanoparticle-containing composition, the content is preferably 97 mass% or less, more preferably 95 mass% or less, even more preferably 93 mass% or less, and yet more preferably 90 mass% or less. With these viewpoints taken together, the content of the copper nanoparticles A in the copper nanoparticle-containing composition according to an embodiment of the present invention is preferably 30 mass% or greater and 97 mass% or less, more preferably 40 mass% or greater and 97 mass% or less, even more preferably 50 mass% or greater and 97 mass% or less, still more preferably 50 mass% or greater and 97 mass% or less, yet more preferably 50 mass% or greater and 95 mass% or less, still even more preferably 50 mass% or greater and 93 mass% or less, and yet even more preferably 55 mass% or greater and 90 mass% or less.

### Monocarboxylic Acid B

In an embodiment of the present invention, from the viewpoint of improving the dispersion stability and storage stability of the copper nanoparticle-containing composition to improve the low-temperature bondability and low-temperature electrical conductivity as well as the bondability and electrical conductivity after storage and from the viewpoint of improving the 250°C heat resistance, the monocarboxylic acid B (hereinafter also referred to simply as "the monocarboxylic acid B") has 5 or more and 12 or less carbons and has one or more functional groups or bonds selected from the group consisting of a hydroxy group, a ketonic carbonyl group, and an ether bond.

The monocarboxylic acid B has one carboxy group in its molecule and further has one or more functional groups or bonds selected from the group consisting of a hydroxy group, a ketonic carbonyl group, and an ether bond and thus is considered to be able to optimize the balance between the affinity to the surface of the copper nanoparticles A and the releasability from the copper nanoparticles A during sintering.

In addition, the monocarboxylic acid B has 5 or more carbons, and thus it is considered that this improves the steric repulsive force of the monocarboxylic acid B to well stabilize the copper nanoparticles A in the copper nanoparticle-containing composition and improves the dispersion stability and storage stability of the copper nanoparticle-containing composition. Furthermore, the monocarboxylic acid B has 12 or less carbons, and it is considered that this allows rapid elimination and movement of the monocarboxylic acid from the copper nanoparticles A during sintering and improves the low-temperature sinterability and improves the low-temperature bondability and low-temperature electrical conductivity, and the bondability and electrical conductivity after storage, as well as the 250°C heat resistance while achieving both the dispersion stability and storage stability as well as the low-temperature sinterability of the copper nanoparticle-containing composition.

From the viewpoint of well stabilizing the copper nanoparticles A in the copper nanoparticle-containing composition, achieving both the dispersion stability and storage stability as well as the low-temperature sinterability of the copper nanoparticle-containing composition to improve the low-temperature bondability and low-temperature electrical conductivity, and the bondability and electrical conductivity after storage, as well as the 250°C heat resistance, the number of carbons in the monocarboxylic acid B is preferably 5 or more and 10 or less, more preferably 5 or more and 8 or less, even more preferably 5 or more and 6 or less, and still more preferably 5.

In an embodiment of the present invention, the number of carbons in the monocarboxylic acid B means the number of carbons including the number of carbons in the functional group belonging to the monocarboxylic acid B.

The monocarboxylic acid B has one or more functional groups or bonds selected from the group consisting of a hydroxy group, a ketonic carbonyl group, and an ether bond. The monocarboxylic acid B having a hydrophilic functional group or bond of these in addition to the carboxy group is considered to have excellent balance between the affinity to the surface of the copper nanoparticles A and the affinity to other components other than the copper nanoparticles A, such as the organic solvent C constituting the copper nanoparticle-containing composition, and to suppress the aggregation of the copper nanoparticles A to maintain the copper nanoparticles A in a well-dispersed state and to exhibit the bonding strength and electrical conductivity as originally designed even after storing the copper nanoparticle-containing composition for a certain period.

In the case where the monocarboxylic acid B has a hydroxy group, the bonding position of the hydroxy group is not particularly limited. However, from the viewpoint of improving the dispersion stability and storage stability of the copper nanoparticle-containing composition to improve the low-temperature bondability and low-temperature electrical conductivity as well as the bondability and electrical conductivity after storage and from the viewpoint of improving the 250°C heat resistance, the hydroxy group is preferably bonded to a position away from the carboxy group, more preferably bonded to a carbon atom at the farthest position from the carboxy group or a carbon atom at the second farthest position from the carboxy group, and even more preferably bonded to a carbon atom at the farthest position from the carboxy group.

In the case where the monocarboxylic acid B has a ketonic carbonyl group, the bonding position of the ketonic carbonyl group is not particularly limited as long as it is at a position other than the carbon atom at the end of the molecular chain. However, from the viewpoint of improving the dispersion stability and storage stability of the copper nanoparticle-containing composition to improve the low-temperature bondability and low-temperature electrical conductivity as well as the bondability and electrical conductivity after storage and from the viewpoint of improving the 250°C heat resistance, the ketonic carbonyl group is preferably bonded to a position away from the carboxy group and more preferably bonded to a carbon atom at the second farthest position from the carboxy group.

In the case where the monocarboxylic acid B has an ether bond, the position of the ether bond is not particularly limited. However, from the viewpoint of improving the dispersion stability and storage stability of the copper nanoparticle-containing composition to improve the low-temperature bondability and low-temperature electrical conductivity as well as the bondability and electrical conductivity after storage and from the viewpoint of improving the 250°C heat resistance, the ether bond is preferably bonded to a position away from the carboxy group.

In an embodiment of the present invention, the "ether bond" means a "carbon-oxygen-carbon bond", and the "position of the ether bond" means a position of the oxygen atom constituting the carbon-oxygen-carbon bond from the carboxy group.

The monocarboxylic acid B may have two or more selected from the group consisting of a hydroxy group, a ketonic carbonyl group, and an ether bond in combination in the molecule. However, from the viewpoint of improving the dispersion stability and storage stability of the copper nanoparticle-containing composition to improve the low-temperature bondability and low-temperature electrical conductivity as well as the bondability and electrical conductivity after storage and from the viewpoint of improving the 250°C heat resistance, the monocarboxylic acid B preferably has only one selected from the group consisting of a hydroxy group, a ketonic carbonyl group, and an ether bond.

The number of one or more functional groups or bonds selected from the group consisting of a hydroxy group, a ketonic carbonyl group, and an ether bond contained in the monocarboxylic acid B may be two or more but is preferably one from the same viewpoints as the above.

From the above, the monocarboxylic acid B is preferably one or more selected from the group consisting of a monocarboxylic acid having one hydroxy group, a monocarboxylic acid having one ketonic carbonyl group, and a monocarboxylic acid having one ether bond from the same viewpoints as the above.

From the viewpoint of improving the dispersion stability and storage stability of the copper nanoparticle-containing composition to improve the low-temperature bondability and low-temperature electrical conductivity as well as the bondability and electrical conductivity after storage and from the viewpoint of improving the 250°C heat resistance, specific examples of the monocarboxylic acid B preferably include one or more selected from the group consisting of 4-oxopentanoic acid (levulinic acid), 5-oxohexanoic acid, 6-hydroxyhexanoic acid, 2-hydroxy-n-octanoic acid, 12-hydroxydodecanoic acid, 2-methoxybutanoic acid, and 3-ethoxypropionic acid.

One monocarboxylic acid B may be used alone, or two or more are used in combination.

The copper nanoparticle-containing composition according to an embodiment of the present invention may contain a carboxylic acid compound other than the monocarboxylic acid B as long as the effects of the present invention are not impaired. Specific examples of the carboxylic acid compound other than the monocarboxylic acid B include a monocarboxylic acid having less than 5 carbons, a monocarboxylic acid having more than 12 carbons, a tricarboxylic acid, a tetracarboxylic acid, and a polycarboxylic acid.

In the copper nanoparticle-containing composition according to an embodiment of the present invention, from the viewpoint of improving the dispersion stability and storage stability of the copper nanoparticle-containing composition to improve the low-temperature bondability and low-temperature electrical conductivity as well as the bondability and electrical conductivity after storage and from the viewpoint of improving the 250°C heat resistance, the content of the monocarboxylic acid B in all carboxylic acid compounds is preferably 80 mass% or greater, more preferably 90 mass% or greater, even more preferably 95 mass% or greater, still more preferably 98 mass% or greater, yet more preferably 99 mass% or greater, and still even more preferably substantially 100 mass%.

In an embodiment of the present invention, "the content of the monocarboxylic acid B in all carboxylic acid compounds is substantially 100 mass%" means that no carboxylic acid compound other than the monocarboxylic acid B is contained but this allows the presence of a carboxylic acid compound unintentionally contained in the monocarboxylic acid B, the carboxylic acid compound other than the monocarboxylic acid B, specifically an impurity contained in the monocarboxylic acid B.

From the viewpoint of improving the dispersion stability and storage stability of the copper nanoparticle-containing composition to improve the low-temperature bondability and low-temperature electrical conductivity as well as the bondability and electrical conductivity after storage, the content of the monocarboxylic acid B in the copper nanoparticle-containing composition according to an embodiment of the present invention is preferably 0.1 mass% or greater, more preferably 0.3 mass% or greater, even more preferably 0.5 mass% or greater, and still more preferably 0.7 mass% or greater. In addition, from the viewpoint of improving the 250°C heat resistance, the content is preferably 7 mass% or less, more preferably 5 mass% or less, even more preferably 3 mass% or less, even more preferably 2 mass% or less, and still more preferably 1 mass% or less. With these viewpoints taken together, the content of the monocarboxylic acid B in the copper nanoparticle-containing composition according to an embodiment of the present invention is preferably 0.1 mass% or greater and 7 mass% or less, more preferably 0.3 mass% or greater and 5 mass% or less, even more preferably 0.5 mass% or greater and 3 mass% or less, still more preferably 0.7 mass% or greater and 2 mass% or less, and yet more preferably 0.7 mass% or greater and 1 mass% or less.

From the viewpoint of improving the dispersion stability and storage stability of the copper nanoparticle-containing composition to improve the low-temperature bondability and low-temperature electrical conductivity as well as the bondability and electrical conductivity after storage, the ratio of the mass of the monocarboxylic acid B to the total mass of the copper nanoparticles A and the monocarboxylic acid B in the copper nanoparticle-containing composition according to an embodiment of the present invention (which may be hereinafter described as "mass ratio [monocarboxylic acid B/(copper nanoparticles A + monocarboxylic acid B)]") is preferably 0.003 or greater, more preferably 0.005 or greater, and even and more preferably 0.007 or greater. In addition, from the viewpoint of improving the 250°C heat resistance, the mass ratio is preferably 0.015 or less, more preferably 0.013 or less, even more preferably 0.010 or less, and still more preferably 0.009 or less. With these viewpoints taken together, the mass ratio [monocarboxylic acid B/(copper nanoparticles A + monocarboxylic acid B)] is preferably 0.003 or greater and 0.015 or less, more preferably 0.005 or greater and 0.013 or less, even more preferably 0.005 or greater and 0.010 or less, still more preferably 0.007 or greater and 0.010 or less, and yet more preferably 0.007 or greater and 0.009 or less.

The mass ratio [monocarboxylic acid B/(copper nanoparticles A + monocarboxylic acid B)] is measured by the method described in Examples.

### Organic Solvent C

The copper nanoparticle-containing composition according to an embodiment of the present invention contains an organic solvent C for the copper nanoparticle-containing composition (hereinafter also referred to as "the organic solvent C") as a dispersion medium for dispersing the copper nanoparticles A.

Examples of the organic solvent C preferably include one or more selected from the group consisting of a hydrocarbon, an alcohol, an ether, and an ester. One organic solvent C may be used alone, or two or more are used in combination.

The organic solvent C is more preferably one or more selected from the group consisting of an alcohol, an ether, and an ester, and even more preferably one or more selected from the group consisting of an aliphatic monohydric alcohol, a (poly)alkylene glycol, and a (poly)alkylene glycol derivative.

Examples of the aliphatic monohydric alcohol include allyl alcohol, n-heptanol, n-octanol, 2-ethylhexyl alcohol, n-nonanol, n-decanol, lauryl alcohol, myristyl alcohol, cetyl alcohol, hexadecenol, stearyl alcohol, oleyl alcohol, and a terpene alcohol. Among these, the aliphatic monohydric alcohol is preferably a terpene alcohol. Examples of the terpene alcohol preferably include a monoterpene alcohol, such as α-terpineol, linalool, geraniol, citronellol, and dihydroterpineol.

The (poly)alkylene glycol is one or more selected from the group consisting of an alkylene glycol and a polyalkylene glycol.

Examples of the alkylene glycol include ethylene glycol, propylene glycol, butylene glycol, and neopentyl glycol.

Examples of the polyalkylene glycol include diethylene glycol, triethylene glycol, tetraethylene glycol, polyethylene glycol (with a number average molecular weight of preferably 100 or greater and 1000 or less, more preferably 150 or greater and 600 or less, even more preferably 150 or greater and 500 or less, and still more preferably 180 or greater and 500 or less), dipropylene glycol, tripropylene glycol, a polypropylene glycol (with a number average molecular weight of preferably 150 or greater and 1000 or less, more preferably 180 or greater and 600 or less, and even more preferably 200 or greater and 500 or less), and a polytetramethylene glycol.

Examples of the (poly)alkylene glycol derivative include a compound obtained by etherifying or esterifying the terminal hydroxy group of the (poly)alkylene glycol. Specific examples include one or more selected from the group consisting of a (poly)alkylene glycol alkyl ether and a (poly)alkylene glycol monoalkyl ether acetate.

The (poly)alkylene glycol alkyl ether is one or more selected from the group consisting of an alkylene glycol alkyl ether and a polyalkylene glycol alkyl ether.

Examples of the (poly)alkylene glycol alkyl ether include a (poly)alkylene glycol monoalkyl ether, such as ethylene glycol monomethyl ether, ethylene glycol monobutyl ether, diethylene glycol monomethyl ether, diethylene glycol monobutyl ether, triethylene glycol butyl ether, propylene glycol monomethyl ether, propylene glycol monobutyl ether, and dipropylene glycol monomethyl ether.

The (poly)alkylene glycol monoalkyl ether acetate is one or more selected from the group consisting of an alkylene glycol monoalkyl ether acetate and a polyalkylene glycol monoalkyl ether acetate.

Examples of the (poly)alkylene glycol monoalkyl ether acetate include ethylene glycol monomethyl ether acetate, ethylene glycol monoethyl ether acetate, ethylene glycol monobutyl ether acetate, propylene glycol monomethyl ether acetate, propylene glycol monoethyl ether acetate, diethylene glycol monomethyl ether acetate, diethylene glycol monoethyl ether acetate, and diethylene glycol monobutyl ether acetate.

Among these, from the viewpoint of improving the dispersion stability and storage stability of the copper nanoparticle-containing composition to improve the low-temperature bondability and low-temperature electrical conductivity as well as the bondability and electrical conductivity after storage and from the viewpoint of improving the 250°C heat resistance, the organic solvent C preferably contains one or more selected from the group consisting of a hydroxy group-containing compound having at least one hydroxy group in the molecule (hereinafter also referred to as a "hydroxy group-containing compound") and an ester group-containing compound having at least one ester group in the molecule (hereinafter also referred to as an "ester group-containing compound") and more preferably contains a hydroxy group-containing compound.

In an embodiment of the present invention, the monocarboxylic acid B is not included in the hydroxy group-containing compound and the ester group-containing composition.

The hydroxy group-containing compound is preferably one or more selected from the group consisting of a (poly)alkylene glycol and a (poly)alkylene glycol alkyl ether and more preferably a (poly)alkylene glycol.

The ester group-containing compound is preferably a (poly)alkylene glycol monoalkyl ether acetate.

The organic solvent C may be a combination of two or more hydroxy group-containing compounds or a combination of two or more of a hydroxy group-containing compound(s) and another or other organic solvents. An example of the combination of two or more organic solvents C is preferably a combination of two or more (poly)alkylene glycols, a combination of a (poly)alkylene glycol and an aliphatic monohydric alcohol, a combination of a (poly)alkylene glycol and a (poly)alkylene glycol monoalkyl ether, or a combination of a (poly)alkylene glycol and a (poly)alkylene glycol monoalkyl ether acetate.

The combination of two or more (poly)alkylene glycols is preferably a combination of dipropylene glycol and tetraethylene glycol or a combination of dipropylene glycol and a polyethylene glycol.

The combination of a (poly)alkylene glycol and an aliphatic monohydric alcohol is preferably a combination of a polyethylene glycol and a terpene alcohol and more preferably a combination of a polyethylene glycol and α-terpineol.

The combination of a (poly)alkylene glycol and a (poly)alkylene glycol monoalkyl ether is preferably a combination of dipropylene glycol and diethylene glycol monobutyl ether or a combination of a polyethylene glycol and diethylene glycol monobutyl ether.

The combination of a (poly)alkylene glycol and a (poly)alkylene glycol monoalkyl ether acetate is preferably a combination of a polyethylene glycol and diethylene glycol monobutyl ether acetate.

From the viewpoint of improving the dispersion stability and storage stability of the copper nanoparticle-containing composition to improve the low-temperature bondability and low-temperature electrical conductivity as well as the bondability and electrical conductivity after storage and from the viewpoint of improving the 250°C heat resistance, the content of the organic solvent C in the copper nanoparticle-containing composition according to an embodiment of the present invention is preferably 1 mass% or greater, more preferably 3 mass% or greater, even more preferably 5 mass% or greater, and still more preferably 7 mass% or greater. In addition, from the same viewpoints as the above, the content is preferably 30 mass% or less, more preferably 25 mass% or less, even more preferably 20 mass% or less, still more preferably 15 mass% or less, and yet more preferably 13 mass% or less. With these viewpoints taken together, the content of the organic solvent C in the copper nanoparticle-containing composition according to an embodiment of the present invention is preferably 1 mass% or greater and 30 mass% or less, more preferably 3 mass% or greater and 25 mass% or less, even more preferably 5 mass% or greater and 20 mass% or less, still more preferably 7 mass% or greater and 15 mass% or less, and yet more preferably 7 mass% or greater and 13 mass% or less.

From the viewpoint of improving the dispersion stability and storage stability of the copper nanoparticle-containing composition to improve the low-temperature bondability and low-temperature electrical conductivity as well as the bondability and electrical conductivity after storage and from the viewpoint of improving the 250°C heat resistance, the mass ratio of the content of the organic solvent C to the content of the monocarboxylic acid B in the copper nanoparticle-containing composition according to an embodiment of the present invention [organic solvent C/monocarboxylic acid B] is preferably 1 or more, more preferably 3 or more, even more preferably 5 or more, still more preferably 7 or more, and yet more preferably 9 or more. In addition, from the same viewpoints as the above, the mass ratio is preferably 20 or less, more preferably 17 or less, even more preferably 15 or less, still more preferably 14 or less, and yet more preferably 13 or less. With these viewpoints taken together, the mass ratio of the content of the organic solvent C to the content of the monocarboxylic acid B in the copper nanoparticle-containing composition according to an embodiment of the present invention [organic solvent C/monocarboxylic acid B] is preferably 1 or greater and 20 or less, more preferably 3 or greater and 17 or less, even more preferably 5 or greater and 15 or less, still more preferably 7 or greater and 14 or less, and yet more preferably 9 or greater and 13 or less.

For the organic solvent C containing one or more selected from the group consisting of hydroxy group-containing compounds and ester group-containing compounds, from the viewpoint of improving the dispersion stability and storage stability of the copper nanoparticle-containing composition to improve the low-temperature bondability and low-temperature electrical conductivity as well as the bondability and electrical conductivity after storage and from the viewpoint of improving the 250°C heat resistance, in the copper nanoparticle-containing composition according to an embodiment of the present invention, the total content of the hydroxy group-containing compound and the ester group-containing compound in the organic solvent C is preferably 40 mass% or greater, more preferably 50 mass% or greater, even more preferably 60 mass% or greater, still more preferably 70 mass% or greater, yet more preferably 80 mass% or greater, still even more preferably 90 mass% or greater, yet even more preferably 95 mass% or greater, yet still more preferably 98 mass% or greater, and even still more preferably substantially 100 mass%.

In an embodiment of the present invention, "the total content of the hydroxy group-containing compound and the ester group-containing compound in the organic solvent C is substantially 100 mass%" means that the organic solvent C does not contain any organic solvent other than the hydroxy group-containing compound and the ester group-containing compound but this allows the presence of an organic solvent other than the hydroxy group-containing compound and the ester group-containing compound, the organic solvent unintentionally contained in the hydroxy group-containing compound or the ester group-containing compound, specifically, an impurity contained in the hydroxy group-containing compound or the ester group-containing compound.

For the organic solvent C containing a hydroxy group-containing compound, from the viewpoint of improving the dispersion stability and storage stability of the copper nanoparticle-containing composition to improve the low-temperature bondability and low-temperature electrical conductivity as well as the bondability and electrical conductivity after storage and from the viewpoint of improving the 250°C heat resistance, in the copper nanoparticle-containing composition according to an embodiment of the present invention, the content of the hydroxy group-containing compound in the organic solvent C is preferably 40 mass% or greater, more preferably 50 mass% or greater, even more preferably 60 mass% or greater, still more preferably 70 mass% or greater, yet more preferably 80 mass% or greater, still even more preferably 90 mass% or greater, yet even more preferably 95 mass% or greater, yet still more preferably 98 mass% or greater, and even still more preferably substantially 100 mass%.

In an embodiment of the present invention, "the content of the hydroxy group-containing compound in the organic solvent C is substantially 100 mass%" means that the organic solvent C does not contain any organic solvent other than the hydroxy group-containing compound but this allows the presence of an organic solvent other than the hydroxy group-containing compound, the organic solvent unintentionally contained in the hydroxy group-containing compound, specifically, an impurity contained in the hydroxy group-containing compound.

In the copper nanoparticle-containing composition according to an embodiment of the present invention, from the viewpoint of improving the dispersion stability and storage stability of the copper nanoparticle-containing composition to improve the low-temperature bondability and low-temperature electrical conductivity as well as the bondability and electrical conductivity after storage and from the viewpoint of improving the 250°C heat resistance, the total content of a (poly)alkylene glycol and a (poly)alkylene glycol alkyl ether in the organic solvent C is preferably 40 mass% or greater, more preferably 50 mass% or greater, even more preferably 60 mass% or greater, still more preferably 70 mass% or greater, yet more preferably 80 mass% or greater, still even more preferably 90 mass% or greater, yet even more preferably 95 mass% or greater, yet still more preferably 98 mass% or greater, and even still more preferably substantially 100 mass%.

In an embodiment of the present invention, "the total content of a (poly)alkylene glycol and a (poly)alkylene glycol alkyl ether in the organic solvent C is substantially 100 mass%" means that the organic solvent C does not contain any organic solvent other than the (poly)alkylene glycol and the (poly)alkylene glycol alkyl ether but this allows the presence of an organic solvent other than the (poly)alkylene glycol and the (poly)alkylene glycol alkyl ether, the organic solvent unintentionally contained in the (poly)alkylene glycol or the (poly)alkylene glycol alkyl ether, specifically, an impurity contained in the (poly)alkylene glycol and the (poly)alkylene glycol alkyl ether.

### Metal Microparticles D

The copper nanoparticle-containing composition according to an embodiment of the present invention preferably contains metal microparticles D from the viewpoint of improving the low-temperature bondability and low-temperature electrical conductivity as well as the bondability and electrical conductivity after storage and from the viewpoint of improving the 250°C heat resistance. The coexistence of the metal microparticles D with the copper nanoparticles A in the copper nanoparticle-containing composition according to an embodiment of the present invention allows the copper nanoparticles A as a binder to contribute to binding the metal microparticles D to each other and can exhibit high electrical conductivity and high bonding strength.

In an embodiment of the present invention, for the metal microparticles D, any one metal can be used alone or two or more are used in combination. However, from the viewpoint of improving the low-temperature bondability and low-temperature electrical conductivity as well as the bondability and electrical conductivity after storage and from the viewpoint of improving the 250°C heat resistance, the metal for the metal microparticles D is preferably one or more selected from the group consisting of gold, platinum, silver, copper, nickel, bismuth, tin, and iron, more preferably one or more selected from the group consisting of gold, platinum, silver, and copper, even more preferably one or more selected from the group consisting of silver and copper, and still more preferably copper.

In an embodiment of the present invention, the metal microparticles D mean an aggregate of metal microparticles with an average particle size of more than 500 nm. From the viewpoint of improving the dispersion stability and storage stability of the copper nanoparticle-containing composition to improve the low-temperature bondability and low-temperature electrical conductivity as well as the bondability and electrical conductivity after storage, the average particle size of the metal microparticles D is preferably 0.6 µm or greater, more preferably 0.65 µm or greater, even more preferably 0.7 µm or greater, still more preferably 0.75 µm or greater, and yet more preferably 0.8 µm or greater. In addition, from the viewpoint of the 250°C heat resistance, the average particle size is preferably 8 µm or less, more preferably 6 µm or less, even more preferably 5 µm or less, still more preferably 2 µm or less, and yet more preferably 1 µm or less. With these viewpoints taken together, the average particle size of the metal microparticles D is preferably 0.6 µm or greater and 8 µm or less, more preferably 0.65 µm or greater and 6 µm or less, even more preferably 0.7 µm or greater and 6 µm or less, still more preferably 0.7 µm or greater and 5 µm or less, yet more preferably 0.7 µm or greater and 2 µm or less, still even more preferably 0.7 µm or greater and 1 µm or less, yet even more preferably 0.75 µm or greater and 1 µm or less, and yet still more preferably 0.8 µm or greater and 1 µm or less.

In an embodiment of the present invention, even though the metal microparticles D contain a particle with a particle size of 500 nm or less, the effects of the present invention can be exhibited as long as the average particle size of the metal microparticles D is more than 500 nm.

The average particle size of the metal microparticles D is measured by the method described in Examples.

For the copper nanoparticle-containing composition according to an embodiment of the present invention containing the metal microparticles D, in the measurement by the method described in Examples, particles with an average particle size of 500 nm or less are regarded as the copper nanoparticles A, and particles with an average particle size of more than 500 nm are regarded as the metal microparticles D.

For the copper nanoparticle-containing composition according to an embodiment of the present invention further containing the metal microparticles D, the organic solvent C as a dispersion medium for the copper nanoparticle-containing composition is preferably a combination of a polyethylene glycol and a terpene alcohol (among others, preferably a combination of a polyethylene glycol and α-terpineol), a combination of a polyethylene glycol and diethylene glycol monobutyl ether, or a combination of a polyethylene glycol and diethylene glycol monobutyl ether acetate. These combinations are considered to exhibit a synergistic effect in combination with the monocarboxylic acid B. The mechanism of achieving such an effect is not clear. Since these combinations all contain a polyethylene glycol, which has a high molecular weight but has properties of being prone to decomposition at a high temperature, and also these combinations have a balance between hydrophobicity and hydrophilicity suitable for the monocarboxylic acid B and also have properties of easily being volatilized, when the composition further contains the metal microparticles D, it presumably allows sintering of the particles to efficiently proceed in firing the copper nanoparticle-containing composition even if the content ratio of the copper nanoparticles A is relatively reduced.

From the viewpoint of improving the dispersion stability and storage stability of the copper nanoparticle-containing composition to improve the low-temperature bondability and low-temperature electrical conductivity as well as the bondability and electrical conductivity after storage and from the viewpoint of improving the 250°C heat resistance, the content of the metal microparticles D in the copper nanoparticle-containing composition according to an embodiment of the present invention is preferably 5 mass% or greater, more preferably 15 mass% or greater, even more preferably 20 mass% or greater, and still more preferably 25 mass% or greater. In addition, from the same viewpoints as the above, the content is preferably 65 mass% or less, more preferably 55 mass% or less, even more preferably 45 mass% or less, and still more preferably 35 mass% or less.

For the copper nanoparticle-containing composition according to an embodiment of the present invention containing the metal microparticles D, from the viewpoint of improving the dispersion stability and storage stability of the copper nanoparticle-containing composition to improve the low-temperature bondability and low-temperature electrical conductivity as well as the bondability and electrical conductivity after storage and from the viewpoint of improving the 250°C heat resistance, the mass ratio of the content of the metal microparticles D to the content of the copper nanoparticles A in the copper nanoparticle-containing composition according to an embodiment of the present invention [metal microparticles D/copper nanoparticles A] is preferably 0.01 or greater, more preferably 0.1 or greater, even more preferably 0.2 or greater, still more preferably 0.3 or greater, and yet more preferably 0.4 or greater, and preferably 3 or less, more preferably 2 or less, even more preferably 1.5 or less, still more preferably 1 or less, and yet more preferably 0.7 or less.

The copper nanoparticle-containing composition according to an embodiment of the present invention may contain an additive of various types as an additional component besides the components A to D as long as the effects of the present invention are not inhibited. Examples of the additive include a dispersant, a surfactant, an antifoaming agent, and a filler.

The copper nanoparticle-containing composition according to an embodiment of the present invention may contain water as an additional component besides the components A to D, but the content of water in the copper nanoparticle-containing composition according to an embodiment of the present invention is preferably 1 mass% or less, more preferably 0.1 mass% or less, and even more preferably substantially 0 mass%.

"The content of water in the copper nanoparticle-containing composition according to an embodiment of the present invention is substantially 0 mass%" means that the copper nanoparticle-containing composition does not intentionally contain water, but this allows the presence of moisture unintentionally contained in the components used in the copper nanoparticle-containing composition.

### Preparation of Copper Nanoparticle-Containing Composition

Examples of the preparation of the copper nanoparticle-containing composition according to an embodiment of the present invention include a method (i) of preparing the copper nanoparticles A in advance by a known method and mixing the prepared copper nanoparticles A with the monocarboxylic acid B and the organic solvent C and as necessary with the metal microparticles D and an additive of various types; and a method (ii) of using a dispersion liquid of the copper nanoparticles A dispersed by the monocarboxylic acid B and mixing the dispersion liquid with the organic solvent C in the case where the dispersion medium of the dispersion liquid is not the organic solvent C and as necessary further with the metal microparticles D and an additive of various types. Among these, from the viewpoint of improving the dispersion stability and storage stability of the copper nanoparticle-containing composition to improve the low-temperature bondability and low-temperature electrical conductivity as well as the bondability and electrical conductivity after storage and from the viewpoint of improving the 250°C heat resistance, the method (ii) is preferred.

The method of mixing these is not particularly limited and can be performed using a mixer, a stirrer and/or the like by a method known in the art. Specific examples of the method include a method of kneading using a spatula on a plate-like material, a method of mixing using a mortar, and a method of kneading using a planetary centrifugal mixer.

The dispersion liquid of the copper nanoparticles A used in the method (ii) can be obtained by holding a copper raw material compound as a supply source of copper constituting the copper nanoparticles A and the monocarboxylic acid B at a temperature in the range of 50°C or higher and 100°C or lower in the presence of an organic solvent for preparing the copper nanoparticles A. According to the method (ii), the copper nanoparticles A can be obtained in a form in which the monocarboxylic acid B is attached to at least part of the surface of the copper nanoparticles A.

The copper raw material compound is not particularly limited, and examples include a nitrate salt, a copper sulfate, a copper chloride, copper (I) oxide, copper (II) oxide, a copper acetate, and a copper sulfide. In addition, one copper raw material compound may be used alone or two or more are used in combination. Among these, the copper raw material compound is preferably a copper oxide.

For the organic solvent for preparing the copper nanoparticles A, an organic solvent other than the organic solvent C is preferably used. Suitable examples of the organic solvent for preparing the copper nanoparticles A preferably include alcohols, hydrocarbons, and ketones, more preferably alcohols, and even more preferably one or more selected from the group consisting of methanol, ethanol, propanol, and butanol.

In the preparation of the dispersion liquid of the copper nanoparticles A by the method (ii), a reducing agent is preferably used in addition to the copper raw material compound, the monocarboxylic acid B, and the organic solvent for preparing the copper nanoparticles A. The reducing agent is used for the purpose of reducing the copper raw material compound to yield elemental copper. Examples of the reducing agent preferably include carbon, hydrogen, carbon monoxide, hydrazine, a metal hydride, an aldehyde group-containing compound, and a hydroxy group-containing compound. Among these, hydrazine is more preferred.

The resulting dispersion liquid of the copper nanoparticles A may be purified to remove the organic solvent for preparing the copper nanoparticles A, residual raw materials, and by-products.

Examples of the purification method include a method of allowing the resulting dispersion liquid of the copper nanoparticles A to stand undisturbed for a certain period of time or centrifuging the dispersion liquid, removing the supernatant to collect the precipitate, and repeating adding the organic solvent for preparing the copper nanoparticles A or an organic solvent for purifying the copper nanoparticles A again, and allowing the resulting dispersion liquid to stand undisturbed for a certain period of time or centrifuging the dispersion liquid, and repeating the process for desired times; and a method of removing dissolved matter with an ultrafiltration device.

Suitable examples of the organic solvent for purifying the copper nanoparticles A include those exemplified for the organic solvent for preparing the copper nanoparticles A described above.

The purified dispersion liquid of the copper nanoparticles A still containing the organic solvent for preparing the copper nanoparticles A or the organic solvent for purifying the copper nanoparticles A may be used for the copper nanoparticle-containing composition. However, it is preferred to dry the dispersion liquid of the copper nanoparticles A to remove the organic solvent for preparing the copper nanoparticles A or the organic solvent for purifying the copper nanoparticles A and add the copper nanoparticles A as a dry powder of the copper nanoparticles A containing the monocarboxylic acid B to the copper nanoparticle-containing composition. The resulting dry powder of the copper nanoparticles A containing the monocarboxylic acid B is mixed with the organic solvent C and as necessary with the metal microparticles D and an additive of various types, and a copper nanoparticle-containing composition can be obtained. Examples of the method of removing the organic solvent for preparing the copper nanoparticles A or the organic solvent for purifying the copper nanoparticles A from the dispersion liquid of the copper nanoparticles A include normal-pressure drying, reduced-pressure drying, and freeze-drying, but freeze-drying is preferred.

Interposing the copper nanoparticle-containing composition according to an embodiment of the present invention between a plurality of members to be bonded and firing the composition can form a bonding layer containing a sintered body containing at least copper, and the bonding layer can bond the plurality of members to be bonded. That is, the copper nanoparticle-containing composition according to an embodiment of the present invention is preferably used as a composition for bonding. A bonded body having such a bonding layer has high bonding strength, excellent 250°C heat resistance, and high electrical conductivity. From this point of view, the copper nanoparticle-containing composition according to an embodiment of the present invention can be used, as a composition for bonding, for bonding a chip component, such as a capacitor or a resistor, to a circuit board; bonding a semiconductor chip, such as a memory, a diode, a transistor, an IC, or a CPU to a lead frame or a circuit board; bonding a high-heat-generating semiconductor chip to a heat-radiation substrate; and the like.

### Method for Producing Bonded Body

The method for producing a bonded body according to an embodiment of the present invention includes a step of interposing the above copper nanoparticle-containing composition as a composition for bonding between a plurality of members to be bonded and firing the composition (hereinafter also referred to as "step 1").

In step 1, the method of interposing the copper nanoparticle-containing composition between a plurality of members to be bonded is preferably a method of applying the composition between at least one of the members to be bonded and another member to be bonded, that is, between a first member to be bonded and a second member to be bonded. For the method of applying the copper nanoparticle-containing composition, a method of various types can be used. Examples of the method of applying the copper nanoparticle-containing composition preferably include a screen printing method, a stencil printing method, a flexographic printing method, a gravure printing method, a dipping method, a spray method, a bar coating method, a spin coating method, an inkjet method, a dispenser method, a pin transfer method, a brush coating method, a flow-casting method, and a syringe method. Among these, a stencil printing method is more preferred.

The atmosphere during the firing in step 1 may be an air atmosphere; an atmosphere of inert gas, such as nitrogen; or an atmosphere of reducing gas, such as hydrogen gas; but from the viewpoint of suppressing oxidation of copper and safety, a nitrogen atmosphere is more preferred.

The firing temperature in step 1 is preferably 200°C or higher, more preferably 230°C or higher, and even more preferably 240°C or higher, and is preferably 300°C or lower, more preferably 280°C or lower, and even more preferably 260°C or lower.

The time for maintaining the predetermined temperature during the firing in step 1 is preferably 10 seconds or more, more preferably 60 seconds or more, and even more preferably 120 seconds or more.

During the firing in step 1, it is preferable to heat the first member to be bonded and the second member to be bonded while the pressure is applied thereto. The pressure applied to the first member to be bonded and the second member to be bonded is preferably 10 MPa or greater, more preferably 15 MPa or greater, and even more preferably 18 MPa or greater, and preferably 30 MPa or less and more preferably 28 MPa or less.

The material of the member to be bonded used in the method for producing a bonded body according to an embodiment of the present invention may be one single material or a material composed of a plurality of different materials. Examples of the material of the member to be bonded used in the method for producing a bonded body according to an embodiment of the present invention preferably include one or more selected from the group consisting of gold, platinum, silver, copper, iron, nickel, silicon, germanium, and indium.

A preferred combination of the first member to be bonded and the second member to be bonded is preferably a combination of the same kinds or different kinds selected from the group consisting of gold, silver, copper, and silicon, more preferably a combination of copper and copper or a combination of copper and silicon, and even more preferably a combination of copper and silicon.

Examples of the shape of the member to be bonded include various shapes, such as a plate shape. The member to be bonded may be rigid or flexible. The thickness of the member to be bonded can also be appropriately selected.

At least one of the members to be bonded is preferably a metal plate.

In the case where the member to be bonded is a metal plate, the member to be bonded may be in a form in which a surface of glass, a resin, or a metal other than the member to be bonded is coated, plated, or attached with a metal suitable as the member to be bonded described above.

In the case where at least one of the members to be bonded is a metal plate, step 1 preferably includes holding the metal plate at a temperature of 200°C or higher for 30 seconds or more to sinter at least the copper nanoparticles A (hereinafter also referred to as the "sintering treatment step").

The temperature of the metal plate in the sintering treatment step is preferably 230°C or higher and more preferably 240°C or higher, and preferably 300°C or lower, more preferably 280°C or lower, and even more preferably 260°C or lower.

The time for holding the metal plate at the above predetermined temperature in the sintering treatment step is preferably 60 seconds or more and more preferably 120 seconds or more.

In the sintering treatment step, pressure is preferably applied to the members to be bonded. The pressure applied to the members to be bonded in the sintering treatment step is preferably 10 MPa or greater, more preferably 15 MPa or greater, and even more preferably 18 MPa or greater, and preferably 30 MPa or less and more preferably 28 MPa or less.

The bonding strength of the resulting bonded body is preferably 20 MPa or greater, more preferably 25 MPa or greater, and even more preferably 30 MPa or greater.

The bonding strength can be measured by the method used in the evaluation of the low-temperature bondability described in Examples.

The rate of decrease in bonding strength after holding the resulting bonded body at 250°C for 1000 hours is preferably 20% or less, more preferably 15% or less, and even more preferably 10% or less.

The rate of decrease in bonding strength can be calculated by the method used in the evaluation of the 250°C heat resistance described in Examples.

In addition to the application as the composition for bonding described above, the copper nanoparticle-containing composition according to an embodiment of the present invention can be used for forming an electrically conductive structure such as wiring or an electrode with sufficiently low resistivity. Thus, the copper nanoparticle-containing composition according to an embodiment of the present invention can be suitably used for the production of an electronic device containing an electrically conductive structure including a sintered body of the copper nanoparticle-containing composition, such as a thin-film transistor, an integrated circuit including a thin-film transistor, a radio frequency identifier (RFID), a flexible display, an organic EL display, a touch panel, an organic EL element, a circuit board, a sensor device, a conductive pillar, and an electrically conductive material for flip-chip mounting.

### Production of Electrically Conductive Structure

A method for producing an electrically conductive structure according to an embodiment of the present invention is preferably a method including applying a copper nanoparticle-containing composition to a substrate and then firing the composition. With the method including firing (hereinafter also referred to as "step I"), the medium in the applied copper nanoparticle-containing composition can be evaporated and dried and further at least the copper nanoparticles A can be sintered, and thus a residual component in the electrically conductive structure can be reduced.

For the method of applying the copper nanoparticle-containing composition, a method of various types can be used, but examples preferably include the methods exemplified for the method of applying the copper nanoparticle-containing composition in the method for producing a bonded body described above. Among them, a stencil printing method is more preferred.

In step I, the atmosphere during the firing may be an air atmosphere; an atmosphere of inert gas, such as nitrogen; or an atmosphere of reducing gas, such as hydrogen gas; but from the viewpoint of suppressing oxidation of copper and safety, a nitrogen atmosphere is more preferred.

In step I, the firing temperature is preferably 200°C or higher, more preferably 230°C or higher, and even more preferably 240°C or higher, and is preferably 300°C or lower, more preferably 280°C or lower, and even more preferably 260°C or lower.

In step I, the time for maintaining the predetermined temperature during the firing can be appropriately selected according to the temperature for firing but is preferably 1 minute or more, more preferably 3 minutes or more, and even more preferably 5 minutes or more, and preferably 60 minutes or less, more preferably 30 minutes or less, and even more preferably 20 minutes or less.

Examples of the method of heating in step I include: a method of heating by bringing a heater into contact with the surface of the substrate, the surface opposite from the surface coated with the copper nanoparticle-containing composition; a method of storing the substrate to which the copper nanoparticle-containing composition is applied in a thermostatic apparatus capable of keeping the temperature constant; a method of heating the substrate surface to which the copper nanoparticle-containing composition is applied, with hot air; a method of heating by bringing a heater close to the substrate surface coated with the copper nanoparticle-containing composition; a method of heating by steam curing using high-temperature steam at normal or high pressure; and a method of heating by irradiation with light, such as near-infrared light or ultraviolet light.

### Examples

Hereinafter, the present invention will be described in more detail by examples. However, the scope of the present invention is not limited to such examples.

Various physical properties were measured or calculated by the following methods.

### Average Particle Sizes of Copper Nanoparticles A and Metal Microparticles D

A scanning electron microscope (SEM) image of the copper nanoparticles A or the metal microparticles D was captured using a scanning electron microscope (available from Hitachi High-Technologies Corporation, field emission scanning electron microscope S-4800). The magnification was determined according to the particle size of the particles, and the image was taken in the range of 5,000x to 150,000x. The SEM image was analyzed using image analysis software "ImageJ" (US National Institutes of Health), particle sizes of 100 or more particles per sample were determined, and their arithmetic average value was calculated as the average particle size of the copper nanoparticles A or the metal microparticles D.

### Calculation of Ratio of Mass of Monocarboxylic Acid B to Total Mass of Copper Nanoparticles A and Monocarboxylic Acid B (Mass Ratio [Monocarboxylic Acid B/(Copper Nanoparticles A + Monocarboxylic Acid B)])

Using a differential thermal-thermogravimetric simultaneous analyzer (TG/DTA) "STA7200RV" (available from Hitachi High-Tech Science Corporation), 10 mg of a sample (dry powder of the copper nanoparticles A containing the monocarboxylic acid B) was weighed in an aluminum pan cell, the temperature was increased from 35°C to 550°C at a temperature increase rate of 10°C/min under a nitrogen flow of 50 mL/min, and the mass loss was measured. The ratio of the mass of the carboxylic acid B to the total mass of the copper nanoparticles A and the monocarboxylic acid B (mass ratio [monocarboxylic acid B/(copper nanoparticles A + monocarboxylic acid B)]) was calculated assuming that the mass loss from 35°C to 550°C was the mass of the monocarboxylic acid B and the remaining mass at 550°C was the mass of the copper nanoparticles A.

### Production of Dry Powder of Copper Nanoparticles A Containing Monocarboxylic Acid B Production Example 1

In a 2-L beaker, 50.0 g of copper (II) oxide (available from Nisshin Chemco Ltd., grade N-120) as the copper raw material compound, 4.40 g of 4-oxopentanoic acid (levulinic acid) (Tokyo Chemical Industry Co., Ltd., purity >97 mass%) as the monocarboxylic acid B, and 500 g of ethanol (95) (FUJIFILM Wako Pure Chemical Corporation, guaranteed reagent) were placed and stirred for 15 minutes. During the stirring, the temperature of the mixed liquid was controlled at 70°C in an oil bath.

Then, 63.0 g of hydrazine monohydrate (guaranteed reagent, available from FUJIFILM Wako Pure Chemical Corporation) as a reducing agent was placed in a 50-mL dropping funnel and added dropwise to the mixed liquid at 25°C over 20 minutes. Thereafter, the reaction liquid was stirred for 1 hour while the temperature of the reaction liquid was controlled at 70°C in an oil bath, then air-cooled, and a reddish brown dispersion liquid containing copper nanoparticles was obtained.

Using a cooling centrifuge "himac CR22G" and a rotor (R12A, radius 15.1 cm) available from Hitachi Koki Co., Ltd., the entire amount of the resulting dispersion liquid was placed in a centrifugal sedimentation tube 500PA bottle available from Hitachi Koki Co., Ltd., and the dispersion liquid was subjected to a centrifugal acceleration force of 675 G at 2,000 rotations/min, and maintained at this state for 30 minutes. To the precipitate collected by the centrifugation, 300 g of acetone (extra pure reagent, FUJIFILM Wako Pure Chemical Corporation) was added, the mixture was stirred for 15 minutes, and the precipitate was redispersed. The total amount of the redispersion liquid was centrifuged again under the same conditions, and the precipitate was collected. This operation was performed twice.

Then, to the precipitate, 300 g of methanol (guaranteed reagent, FUJIFILM Wako Pure Chemical Corporation) was added, the mixture was stirred for 15 minutes, and the precipitate was redispersed. The total amount of the redispersion liquid was centrifuged again under the same conditions, and the precipitate was collected. This operation was performed twice.

The purified precipitate of the copper nanoparticles was freeze-dried using a freeze dryer (available from Tokyo Rikakikai Co., Ltd., model FDU-2110) equipped with a dry chamber (available from Tokyo Rikakikai Co., Ltd., model DRC-1000), and 38.0 g of a dry powder A-1 of copper nanoparticles A1 containing 4-oxopentanoic acid was obtained. The drying conditions were freezing at -25°C for 1 hour, drying under a reduced pressure of 5 Pa at -10°C for 9 hours, and further drying under a reduced pressure of 5 Pa at 25°C for 5 hours. The average particle size of the resulting copper nanoparticles A1 was 200 nm, and the ratio of the mass of 4-oxopentanoic acid to the total mass of the copper nanoparticles A1 and 4-oxopentanoic acid was 0.009. The results are shown in Table 1.

### Production Examples 2 to 7 and Comparative Production Examples 1 to 6

Dry powders of the copper nanoparticles A containing the monocarboxylic acid B shown in Table 1 were obtained in the same manner as in Production Example 1 except for changing the monocarboxylic acid B as shown in Table 1. The average particle sizes of the resulting copper nanoparticles A and the ratios of the mass of the monocarboxylic acid B to the total mass of the copper nanoparticles A and the monocarboxylic acid B are shown in Table 1.

### Production of Dry Powder of Silver Nanoparticles Containing Monocarboxylic Acid B Comparative Production Example 7

A dry powder AC-7 of silver nanoparticles AC7 containing 5-oxohexanoic acid was obtained in the same manner as in Production Example 1 except for changing copper (II) oxide to silver oxide (guaranteed reagent, available from FUJIFILM Wako Pure Chemical Corporation) and changing 4-oxopentanoic acid (levulinic acid) to 5-oxohexanoic acid. The average particle size of the resulting silver nanoparticles AC7 was 170 nm, and the ratio of the mass of 5-oxohexanoic acid to the total mass of the silver nanoparticles AC7 and 5-oxohexanoic acid was 0.011.

### Comparative Production Example 8

A dry powder AC-8 of silver nanoparticles AC8 containing 12-hydroxydodecanoic acid was obtained in the same manner as in Comparative Production Example 7 except for changing 5-oxohexanoic acid to 12-hydroxydodecanoic acid. The average particle size of the resulting silver nanoparticles AC8 was 220 nm, and the ratio of the mass of 12-hydroxydodecanoic acid to the total mass of the silver nanoparticles AC8 and 12-hydroxydodecanoic acid was 0.009.

### [Table 1]

**Table 1**

| | | Type of dry powder | Copper nanoparticles A | Monocarboxylic acid B | Average particle size (nm) of copper nanoparticles A | Mass ratio [monocarboxylic B/(copper nanoparticles A + monocarboxylic acid B)] *1 |
|---|---|---|---|---|---|---|
| Production Example | 1 | A-1 | A1 | 4-Oxopentanoic acid | 200 | 0.009 |
| | 2 | A-2 | A2 | 5-Oxohexanoic acid | 210 | 0.009 |
| | 3 | A-3 | A3 | 6-Hydroxyhexanoic acid | 230 | 0.008 |
| | 4 | A-4 | A4 | 2-Hydroxy-n-octanoic acid | 250 | 0.007 |
| | 5 | A-5 | A5 | 12-Hydroxydodecanoic acid | 260 | 0.007 |
| | 6 | A-6 | A6 | 2-Methoxybutanoic acid | 190 | 0.010 |
| | 7 | A-7 | A7 | 3-Ethoxypropionic acid | 190 | 0.010 |
| Comparative Production Example | 1 | AC-1 | AC1 | (Pyruvic acid) | 120 | 0.016 |
| | 2 | AC-2 | AC2 | (Lactic acid) | 130 | 0.014 |
| | 3 | AC-3 | AC3 | (16-Hydroxyhexadecanoic acid) | 260 | 0.007 |
| | 4 | AC-4 | AC4 | (Methoxyacetic acid) | 150 | 0.013 |
| | 5 | AC-5 | AC5 | (Citric acid) | 160 | 0.012 |
| | 6 | AC-6 | AC6 | (Hexanoic acid) | 200 | 0.009 |
| | 7 | AC-7 | (Silver nanoparticles AC7) | 5-Oxohexanoic acid | 170 | 0.011 |
| | 8 | AC-8 | (Silver nanoparticles AC8) | 12-Hydroxydodecanoic acid | 220 | 0.009 |

| | | | | | | |
|---|---|---|---|---|---|---|
| *1: The ratio of the mass of the monocarboxylic acid B to the total mass of the copper nanoparticles A and the monocarboxylic acid B is shown. | | | | | | |

Note that, for Comparative Production Examples 7 and 8, the ratio of the mass of the monocarboxylic acid B to the total mass of the silver nanoparticles and the monocarboxylic acid B is shown.

The details of the monocarboxylic acid B and other carboxylic acids used in Production Examples 1 to 7 and Comparative Production Examples 1 to 8 are shown below.
Monocarboxylic Acid B
4-Oxopentanoic acid: Tokyo Chemical Industry Co., Ltd., purity > 97 mass%
5-Oxohexanoic acid: Tokyo Chemical Industry Co., Ltd., purity > 98 mass%
6-Hydroxyhexanoic acid: available from Sigma-Aldrich, purity 95 mass%
2-Hydroxy-n-octanoic acid: Tokyo Chemical Industry Co., Ltd., purity > 98 mass%
12-Hydroxydodecanoic acid: available from Sigma-Aldrich, purity 97 mass%
2-Methoxybutanoic acid: FUJIFILM Wako Pure Chemical Corporation, guaranteed reagent
3-Ethoxypropionic acid: Tokyo Chemical Industry Co., Ltd., purity > 98 mass%
Other Carboxylic Acids
Pyruvic acid: Tokyo Chemical Industry Co., Ltd., purity > 97 mass%
Lactic acid: Tokyo Chemical Industry Co., Ltd., purity > 85 mass%
16-Hydroxyhexadecanoic acid: available from Sigma-Aldrich, purity 98 mass%
Methoxyacetic acid: Tokyo Chemical Industry Co., Ltd., purity > 96 mass%
Citric acid: FUJIFILM Wako Pure Chemical Corporation, guaranteed reagent
Hexanoic acid: FUJIFILM Wako Pure Chemical Corporation, guaranteed reagent

### Example 1

### Preparation of Copper Nanoparticle-Containing Composition

As the organic solvents C, 0.5 g of dipropylene glycol (available from FUJIFILM Wako Pure Chemical Corporation, extra pure reagent) and 0.5g of tetraethylene glycol (available from FUJIFILM Wako Pure Chemical Corporation, extra pure reagent), and 9.0 g of the dry powder A-1 of the copper nanoparticles A1 containing 4-oxopentanoic acid were added to an agate mortar and kneaded until the dry powder became invisible by visual observation, and the resulting mixed liquid was transferred to a plastic bottle. The plastic bottle stoppered tightly was agitated at 2,000rpm (2,000 rotations/min) for 5 minutes using a planetary centrifugal mixer (available from Thinky Corporation, model ARV-310), and a copper nanoparticle-containing composition 1 was obtained.

### Production of Bonded Body

A bonded body was produced according to the following method using the resulting copper nanoparticle-containing composition 1.

First, a stainless-steel metal mask (thickness: 150 µm) having three rows of square openings of 6 mm x 6 mm was placed on a copper plate of 30 mm x 30 mm (total thickness: 1 mm), and the copper nanoparticle-containing composition 1 was applied onto the copper plate by stencil printing using a metal squeeze. Thereafter, the copper plate was heated and dried at 120°C for 10 minutes on a Shamal Hot Plate (available from AS ONE Corporation, model No. HHP-441) in an air atmosphere. Thereafter, a silicon chip in which titanium, nickel, and gold were sputtered in this order on a silicon chip (thickness: 400 µm) of 5 mm x 5 mm was prepared, and the silicon chip was placed on the copper nanoparticle-containing composition 1 applied to the copper plate so that the gold was in contact with the copper nanoparticle-containing composition 1. This produced a laminate in which the copper plate, the copper nanoparticle-containing composition 1, and the silicon chip were laminated in this order.

The resulting laminate was fired by the following method, and a bonded body was obtained.

First, the laminate was set in a pressure-heating bonding apparatus (available from MEISYO KIKO Co., Ltd., model number HTM-1000), and nitrogen was introduced into the furnace at 500 mL/min to replace air in the furnace by nitrogen. Thereafter, the temperature of the heating heads was increased to 250°C over 10 minutes while the laminate was pressed at 20 MPa with the upper and lower heating heads. After increasing the temperature, the temperature was maintained at 250°C for 150 seconds, and the laminate was sintered, and a bonded body was obtained. After the sintering treatment, the heating heads were water-cooled at -60°C/min, and when the temperature of the heating heads reached 100°C or lower, the bonded body was taken out into the air.

### Examples 2 to 17 and Comparative Examples 1 to 9

Copper nanoparticle-containing compositions of Examples 2 to 17 and Comparative Examples 1 to 7, silver nanoparticle-containing compositions of Comparative Examples 8 and 9, and bonded bodies were each obtained in the same manner as in Example 1 except for changing the composition of the copper nanoparticle-containing composition to the composition shown in Tables 2 and 3.

Raw materials used for the production of the copper nanoparticle-containing compositions and the silver nanoparticle-containing compositions are shown below.
Other Copper Nanoparticles
Copper nanoparticles AC9: CH-0200L1 (available from Mitsui Mining & Smelting Co., Ltd., particle size 190 nm, lauric acid content 1.3 mass%)
Organic Solvent C
Dipropylene glycol: available from FUJIFILM Wako Pure Chemical Corporation, extra pure reagent
Tetraethylene glycol: available from FUJIFILM Wako Pure Chemical Corporation, extra pure reagent
PEG200: polyalkylene glycol 200, available from FUJIFILM Wako Pure Chemical
Corporation, extra pure reagents, average molecular weight of 180 to 220
PEG400: polyalkylene glycol 400, available from FUJIFILM Wako Pure Chemical
Corporation, extra pure reagent, average molecular weight of 360 to 440
α-Terpineol: available from FUJIFILM Wako Pure Chemical Corporation, guaranteed reagent
Diethylene glycol monobutyl ether: available from FUJIFILM Wako Pure Chemical
Corporation, guaranteed reagent
Diethylene glycol monobutyl ether acetate: Tokyo Chemical Industry Co., Ltd., purity > 98 mass%
Metal Microparticles D
Copper microparticles D1: MA-C025 (available from Mitsui Mining & Smelting Co., Ltd., particle size 5.0 µm)
Copper microparticles D2: 1050Y (available from Mitsui Mining & Smelting Co., Ltd., particle size 0.8 µm)

The following evaluations were performed using the bonded bodies obtained by Examples 1 to 17 and Comparative Examples 1 to 9. The results are shown in Tables 2 and 3.

### Evaluations

### Low-Temperature Bondability

The bonding strength of each bonded body obtained in the examples and comparative examples was measured according to the following procedure.

The die shear strength of the bonded body was measured by pushing the silicon chip of the bonded body to the horizontal direction at a test speed of 5 mm/min and a shear height of 50 µm using a universal bond tester (available from Nordson Advanced Technology Co., Ltd.; product name, Material Tester; model No. Prospector). Three pieces were measured for each bonded body, the average value of the measurement of the three pieces was used as the bonding strength of the bonded body, and the low-temperature bondability was evaluated. The bonded body with a higher numerical value of the bonding strength has excellent low-temperature bondability.

### Bondability after Storage

Each copper nanoparticle-containing composition or silver nanoparticle-containing composition obtained in the examples and comparative examples was stored in an environment of 25°C and a humidity of 50% for 1 month, and then each bonded body was obtained in the same manner as in the production of the bonded body of Example 1. Then, the bonding strength of the bonded body was measured in the same manner as in the evaluation method of the low-temperature bondability described above. The bonded body with a higher numerical value of the bonding strength has excellent bondability after storage.

### 250°C Heat Resistance

Each bonded body obtained in the examples and comparative examples was stored in an environment of 250°C for 1000 hours in an atmospheric atmosphere, and then the bonding strength of the bonded body was measured in the same manner as in the evaluation method of the low-temperature bondability described above. The bonded body with a higher numerical value of the bonding strength has excellent 250°C heat resistance.

In addition, the rate of decrease in the bonding strength was calculated by the following equation. Rate (%) of decrease in bonding strength = (1 - (bonding strength after storage/bonding strength before storage)) × 100

### [Table 2]

**Table 2**

| | | | | | Example | | |
|---|---|---|---|---|---|---|---|
| | | | | | 1 | 2 | 3 |
| Type of copper nanoparticle-containing composition | | | | | 1 | 2 | 3 |
| | Dry powder of copper nanoparticle s A | Type | | | A-1 | A-2 | A-3 |
| | | Blending amount (parts by mass) | | | 90 | 90 | 90 |
| | | Copper nanoparticles A | Type | | A1 | A2 | A3 |
| | | | Blending amount (parts by mass) | | 89.2 | 89.2 | 89.3 |
| | | Monocarboxylic acid B | Type | | 4-Oxopentanoic acid | 5-Oxohexanoic acid | 6-Hydroxyhexanoic acid |
| | | | Blending amount (parts by mass) | | 0.8 | 0.8 | 0.7 |
| | | | Number of carbons | | 5 | 6 | 6 |
| | | | Type of functional group or bond | | Ketonic carbonyl group | Ketonic carbonyl group | Hydroxy group |
| Composition of copper nanoparticle-containing composition | Organic solvent C | | Type and blending amount (parts by mass) | Dipropylene glycol | 5 | 5 | 5 |
| | | | | Tetraethylene glycol | 5 | 5 | 5 |
| | | | | PEG200 | | | |
| | | | | PEG400 | | | |
| | | | | α-Terpineol | | | |
| | | | | Diethylene glycol monobutyl ether | | | |
| | | | | Diethylene glycol monobutyl ether acetate | | | |
| | Metal microparticles D | | Type | | | | |
| | | | Blending amount (parts by mass) | | | | |
| Evaluations | Low-temperature bondability (bonding strength (MPa)) | | | | 30 | 26 | 28 |
| | Bondability after storage (bonding strength (MPa) of copper nanoparticle-containing composition after storage at 25°C and humidity of 50%/1 month) | | | | 28 | 25 | 25 |
| | 250°C Heat resistance (bonding strength (MPa) of bonded body after 250°C/1000 h) | | | | 27 | 25 | 26 |
| | Rate (%) of decrease in bonding strength of bonded body after 250°C/1000 h | | | | 10 | 4 | 7 |

**Table 2 (continued)**

| | | | | | Example | | |
|---|---|---|---|---|---|---|---|
| | | | | | 4 | 5 | 6 |
| Type of copper nanoparticle-containing composition | | | | | 4 | 5 | 6 |
| | Dry powder of copper nanoparticle s A | Type | | | A-4 | A-5 | A-6 |
| | | Blending amount (parts by mass) | | | 90 | 90 | 90 |
| | | Copper nanoparticles A | Type | | A4 | A5 | A6 |
| | | | Blending amount (parts by mass) | | 89.4 | 89.4 | 89.1 |
| | | Monocarboxylic acid B | Type | | 2-Hydroxy-n-octanoic acid | 12-Hydroxydodecanoic acid | 2-Methoxybutanoic acid |
| | | | Blending amount (parts by mass) | | 0.6 | 0.6 | 0.9 |
| | | | Number of carbons | | 8 | 12 | 5 |
| | | | Type of functional group or bond | | Hydroxy group | Hydroxy group | Ether bond |
| | Organic solvent C | | Type and blending amount (parts by mass) | Dipropylene glycol | 5 | 5 | 5 |
| Composition of copper nanoparticle-containing composition | | | | Tetraethylene glycol | 5 | 5 | 5 |
| | | | | PEG200 | | | |
| | | | | PEG400 | | | |
| | | | | α-Terpineol | | | |
| | | | | Diethylene glycol monobutyl ether | | | |
| | | | | Diethylene glycol monobutyl ether acetate | | | |
| | Metal microparticles D | | Type | | | | |
| | | | Blending amount (parts by mass) | | | | |
| Evaluations | Low-temperature bondability (bonding strength (MPa)) | | | | 26 | 21 | 26 |
| | Bondability after storage (bonding strength (MPa) of copper nanoparticle-containing composition after storage at 25°C and humidity of 50%/1 month) | | | | 22 | 21 | 23 |
| | 250°C Heat resistance (bonding strength (MPa) of bonded body after 250°C/1000 h) | | | | 22 | 18 | 22 |
| | Rate (%) of decrease in bonding strength of bonded body after 250°C/1000 h | | | | 15 | 14 | 15 |

**Table 2 (continued)**

| | | | | | Example | | |
|---|---|---|---|---|---|---|---|
| | | | | | 7 | 8 | 9 |
| Type of copper nanoparticle-containing composition | | | | | 7 | 8 | 9 |
| | Dry powder of copper nanoparticle s A | Type | | | A-7 | A-1 | A-7 |
| | | Blending amount (parts by mass) | | | 90 | 60 | 60 |
| | | Copper nanoparticles A | Type | | A7 | A1 | A7 |
| | | | Blending amount (parts by mass) | | 89.1 | 59.5 | 59.4 |
| | | Monocarboxylic acid B | Type | | 3-Ethoxypropionic acid | 4-Oxopentanoic acid | 3-Ethoxypropionic acid |
| | | | Blending amount (parts by mass) | | 0.9 | 0.5 | 0.6 |
| | | | Number of carbons | | 5 | 5 | 5 |
| | | | Type of functional group or bond | | Ether bond | Ketonic carbonyl group | Ether bond |
| Composition of copper nanoparticle-containing composition | Organic solvent C | | Type and blending amount (parts by mass) | Dipropylene glycol | 5 | 5 | 5 |
| | | | | Tetraethylene glycol | 5 | 5 | 5 |
| | | | | PEG200 | | | |
| | | | | PEG400 | | | |
| | | | | α-Terpineol | | | |
| | | | | Diethylene glycol monobutyl ether | | | |
| | | | | Diethylene glycol monobutyl ether acetate | | | |
| | Metal microparticles D | | Type | | | Copper microparticles D1 | Copper microparticles D1 |
| | | | Blending amount (parts by mass) | | | 30 | 30 |
| Evaluations | Low-temperature bondability (bonding strength (MPa)) | | | | 29 | 35 | 34 |
| | Bondability after storage (bonding strength (MPa) of copper nanoparticle-containing composition after storage at 25°C and humidity of 50%/1 month) | | | | 28 | 31 | 32 |
| | 250°C Heat resistance (bonding strength (MPa) of bonded body after 250°C/1000 h) | | | | 25 | 32 | 30 |
| | Rate (%) of decrease in bonding strength of bonded body after 250°C/1000 h | | | | 14 | 9 | 12 |

**Table 2 (continued)**

| | | | | | Example | | |
|---|---|---|---|---|---|---|---|
| | | | | | 10 | 11 | 12 |
| Type of copper nanoparticle-containing composition | | | | | 10 | 11 | 12 |
| | Dry powder of copper nanoparticles A | Type | | | A-1 | A-7 | A-1 |
| | | Blending amount (parts by mass) | | | 60 | 60 | 60 |
| | | Copper nanoparticles A | Type | | A1 | A7 | A1 |
| | | | Blending amount (parts by mass) | | 59.5 | 59.4 | 59.5 |
| | | Monocarboxylic acid B | Type | | 4-Oxopentanoic acid | 3-Ethoxypropionic acid | 4-Oxopentanoic acid |
| | | | Blending amount (parts by mass) | | 0.5 | 0.6 | 0.5 |
| | | | Number of carbons | | 5 | 5 | 5 |
| | | | Type of functional group or bond | | Ketonic carbonyl group | Ether bond | Ketonic carbonyl group |
| Composition of copper nanoparticle-containing composition | Organic solvent C | | Type and blending | Dipropylene glycol | 5 | 5 | 5 |
| | | | | Tetraethylene glycol | 5 | 5 | |
| | | | | PEG200 | | | |
| | | | | PEG400 | | | |
| | | | | α-Terpineol | | | |
| | | | amount (parts by mass) | Diethylene glycol monobutyl ether | | | 5 |
| | | | | Diethylene glycol monobutyl ether acetate | | | |
| | Metal microparticles D | | Type | | Copper microparticles D2 | Copper microparticles D2 | Copper microparticles D1 |
| | | | Blending amount (parts by mass) | | 30 | 30 | 30 |
| Evaluations | Low-temperature bondability (bonding strength (MPa)) | | | | 36 | 34 | 32 |
| | Bondability after storage (bonding strength (MPa) of copper nanoparticle-containing composition after storage at 25°C and humidity of 50%/1 month) | | | | 35 | 33 | 32 |
| | 250°C Heat resistance (bonding strength (MPa) of bonded body after 250°C/1000 h) | | | | 31 | 32 | 29 |
| | Rate (%) of decrease in bonding strength of bonded body after 250°C/1000 h | | | | 14 | 6 | 9 |

**Table 2 (continued)**

| | | | | | Example | | |
|---|---|---|---|---|---|---|---|
| | | | | | 13 | 14 | 15 |
| Type of copper nanoparticle-containing composition | | | | | 13 | 14 | 15 |
| | Dry powder of copper nanoparticles A | Type | | | A-1 | A-7 | A-1 |
| | | Blending amount (parts by mass) | | | 60 | 60 | 60 |
| | | Copper nanoparticles A | Type | | A1 | A7 | A1 |
| | | | Blending amount (parts by mass) | | 59.5 | 59.4 | 59.5 |
| | | Monocarboxylic acid B | Type | | 4-Oxopentanoic acid | 3-Ethoxypropinic acid | 4-Oxopentanoic acid |
| | | | Blending amount (parts by mass) | | 0.5 | 0.6 | 0.5 |
| | | | Number of carbons | | 5 | 5 | 5 |
| | | | Type of functional group or bond | | Ketonic carbonyl group | Ether bond | Ketonic carbonyl group |
| Composition of copper nanoparticle-containing composition | Organic solvent C | | Type and blending | Dipropylene glycol | 5 | 5 | |
| | | | | Tetraethylene glycol | | | |
| | | | | PEG200 | 5 | | 5 |
| | | | | PEG400 | | 5 | |
| | | | | α-Terpineol | | | 5 |
| | | | amount (parts by mass) | Diethylene glycol monobutyl ether | | | |
| | | | | Diethylene glycol monobutyl ether acetate | | | |
| | Metal microparticles D | | Type | | Copper microparticles D2 | Copper microparticles D2 | Copper microparticles D2 |
| | | | Blending amount (parts by mass) | | 30 | 30 | 30 |
| Evaluations | Low-temperature bondability (bonding strength (MPa)) | | | | 36 | 33 | 31 |
| | Bondability after storage (bonding strength (MPa) of copper nanoparticle-containing composition after storage at 25°C and humidity of 50%/1 month) | | | | 32 | 32 | 30 |
| | 250°C Heat resistance (bonding strength (MPa) of bonded body after 250°C/1000 h) | | | | 31 | 30 | 30 |
| | Rate (%) of decrease in bonding strength of bonded body after 250°C/1000 h | | | | 14 | 9 | 3 |

**Table 2 (continued)**

| | | | | | Example | |
|---|---|---|---|---|---|---|
| | | | | | 16 | 17 |
| Type of copper nanoparticle-containing composition | | | | | 16 | 17 |
| | Dry powder of copper nanoparticles A | Type | | | A-7 | A-7 |
| | | Blending amount (parts by mass) | | | 60 | 60 |
| | | Copper nanoparticles A | Type | | A7 | A7 |
| | | | Blending amount (parts by mass) | | 59.4 | 59.4 |
| | | Monocarboxylic acid B | Type | | 3-Ethoxypropionic acid | 3-Ethoxypropyronic acid |
| | | | Blending amount (parts by mass) | | 0.6 | 0.6 |
| | | | Number of carbons | | 5 | 5 |
| | | | Type of functional group or bond | | Ether bond | Ether bond |
| Composition of copper nanoparticle-containing composition | Organic solvent C | | Type and blending amount (parts by mass) | Dipropylene glycol | | |
| | | | | Tetraethylene glycol | | |
| | | | | PEG200 | | 5 |
| | | | | PEG400 | 5 | |
| | | | | α-Terpineol | | |
| | | | | Diethylene glycol monobutyl ether | 5 | |
| | | | | Diethylene glycol monobutyl ether acetate | | 5 |
| | Metal microparticles D | | Type | | Copper microparticles D2 | Copper microparticles D2 |
| | | | Blending amount (parts by mass) | | 30 | 30 |
| Evaluations | Low-temperature bondability (bonding strength (MPa)) | | | | 32 | 30 |
| | Bondability after storage (bonding strength (MPa) of copper nanoparticle-containing composition after storage at 25°C and humidity of 50%/1 month) | | | | 30 | 30 |
| | 250°C Heat resistance (bonding strength (MPa) of bonded body after 250°C/1000 h) | | | | 31 | 29 |
| | Rate (%) of decrease in bonding strength of bonded body after 250°C/1000 h | | | | 3 | 3 |

### [Table 3]

**Table 3**

| | | | | | Comparative Example | | |
|---|---|---|---|---|---|---|---|
| | | | | | 1 | 2 | 3 |
| Type of copper nanoparticle-containing composition or silver nanoparticle-containing composition | | | | | C1 | C2 | C3 |
| | Dry powder of copper nanoparticles A or dry powder of silver nanoparticles | Type | | | AC-1 | AC-2 | AC-3 |
| | | Blending amount (parts by mass) | | | 90 | 90 | 90 |
| | | Copper nanoparticles A or silver nanoparticles | Type | | AC1 | AC2 | AC3 |
| | | | Blending amount (parts by mass) | | 88.6 | 88.7 | 89.4 |
| | | Monocarboxylic acid B | Type | | Pyruvic acid | Lactic acid | 16-Hydroxyhexadecanoic acid |
| | | | Blending amount (parts by mass) | | 1.4 | 1.3 | 0.6 |
| | | | Number of carbons | | 2 | 3 | 16 |
| | | | Type of functional group or bond | | Ketonic carbonyl group | Hydroxy group | Hydroxy group |
| Composition of copper nanoparticle-containing composition or silver nanoparticle-containing composition | Organic solvent C | | Type and blending | Dipropylene glycol | 5 | 5 | 5 |
| | | | | Tetraethylene glycol | 5 | 5 | 5 |
| | | | | PEG200 | | | |
| | | | | PEG400 | | | |
| | | | | α-Terpineol | | | |
| | | | amount (parts by mass) | Diethylene glycol monobutyl ether | | | |
| | | | | Diethylene glycol monobutyl ether acetate | | | |
| | Metal microparticles D | | Type | | | | |
| | | | Blending amount (parts by mass) | | | | |
| Evaluations | Low-temperature bondability (bonding strength (MPa)) | | | | 21 | 18 | 3 |
| | Bondability after storage (bonding strength (MPa) of copper nanoparticle-containing composition or silver nanoparticle-containing composition after storage at 25°C and humidity of 50%/1 month) | | | | Unable to be applied | Unable to be applied | 3 |
| | 250°C Heat resistance (bonding strength (MPa) of bonded body after 250°C/1000 h) | | | | 20 | 17 | 1 |
| | Rate (%) of decrease in bonding strength of bonded body after 250°C/1000 h | | | | 5 | 6 | 67 |

**Table 3 (continued)**

| | | | | | Comparative Example | | | |
|---|---|---|---|---|---|---|---|---|
| | | | | | 4 | 5 | 6 | 7 |
| Type of copper nanoparticle-containing composition or silver nanoparticle-containing composition | | | | | C4 | C5 | C6 | C7 |
| | Dry powder of copper nanoparticles A or dry powder of silver nanoparticles | Type | | | AC-4 | AC-5 | AC-6 | AC-9 |
| | | Blending amount (parts by mass) | | | 90 | 90 | 90 | 90 |
| | | Copper nanoparticles A or silver nanoparticles | Type | | AC4 | AC5 | AC6 | AC9 |
| | | | Blending amount (parts by mass) | | 88.8 | 88.9 | 89.2 | 88.8 |
| | | Monocarboxylic acid B | Type | | Methoxyacetic acid | Citric acid | Hexanoic acid | Lauric acid |
| | | | Blending amount (parts by mass) | | 1.2 | 1.1 | 0.8 | 1.2 |
| | | | Number of carbons | | 3 | 6 | 6 | 12 |
| | | | Type of functional group or bond | | Ether bond | Hydroxy group | - | - |
| Composition of copper nanoparticle-containing composition or silver nanoparticle-containing composition | Organic solvent C | | Type and blending | Dipropylene glycol | 5 | 5 | 5 | 5 |
| | | | | Tetraethylene glycol | 5 | 5 | 5 | 5 |
| | | | | PEG200 | | | | |
| | | | | PEG400 | | | | |
| | | | amount (parts by mass) | α-Terpineol | | | | |
| | | | | Diethylene glycol monobutyl ether | | | | |
| | | | | Diethylene glycol monobutyl ether acetate | | | | |
| | Metal microparticles D | | Type | | | | | |
| | | | Blending amount (parts by mass) | | | | | |
| Evaluations | Low-temperature bondability (bonding strength (MPa)) | | | | 22 | 3 | 29 | 22 |
| | Bondability after storage (bonding strength (MPa) of copper nanoparticle-containing composition or silver nanoparticle-containing composition after storage at 25°C and humidity of 50%/1 month) | | | | Unable to be applied | 2 | Unable to be applied | Unable to be applied |
| | 250°C Heat resistance (bonding strength (MPa) of bonded body after 250°C/1000 h) | | | | 21 | 2 | 27 | 19 |
| | Rate (%) of decrease in bonding strength of bonded body after 250°C/1000 h | | | | 5 | 33 | 7 | 14 |

**Table 3 (continued)**

| | | | | | Comparative Example | |
|---|---|---|---|---|---|---|
| | | | | | 8 | 9 |
| Type of copper nanoparticle-containing composition or silver nanoparticle-containing composition | | | | | C8 | C9 |
| | Dry powder of copper nanoparticles A or dry powder of silver nanoparticles | Type | | | (Silver nanoparticles AC-7) | (Silver nanoparticles AC-8) |
| | | Blending amount (parts by mass) | | | 90 | 90 |
| | | Copper nanoparticles A or silver nanoparticles | Type | | (Silver nanoparticles AC7) | (Silver nanoparticles AC8) |
| | | | Blending amount (parts by mass) | | 89.0 | 89.2 |
| | | Monocarboxylic acid B | Type | | 5-Oxohexanoic acid | 12-Hydroxydodecanoic acid |
| | | | Blending amount (parts by mass) | | 1.0 | 0.8 |
| | | | Number of carbons | | 6 | 12 |
| | | | Type of functional group or bond | | Ketonic carbonyl group | Hydroxy group |
| Composition of copper nanoparticle-containing composition or silver nanoparticle-containing composition | Organic solvent C | | Type and blending amount (parts by mass) | Dipropylene glycol | 5 | 5 |
| | | | | Tetraethylene glycol | 5 | 5 |
| | | | | PEG200 | | |
| | | | | PEG400 | | |
| | | | | α-Terpineol | | |
| | | | | Diethylene glycol monobutyl ether | | |
| | | | | Diethylene glycol monobutyl ether acetate | | |
| | Metal microparticles D | | Type | | | |
| | | | Blending amount (parts by mass) | | | |
| Evaluations | Low-temperature bondability (bonding strength (MPa)) | | | | 26 | 23 |
| | Bondability after storage (bonding strength (MPa) of copper nanoparticle-containing composition or silver nanoparticle-containing composition after storage at 25°C and humidity of 50%/1 month) | | | | 24 | 20 |
| | 250°C Heat resistance (bonding strength (MPa) of bonded body after 250°C/1000 h) | | | | 2 | 1 |
| | Rate (%) of decrease in bonding strength of bonded body after 250°C/1000 h | | | | 92 | 96 |

As can be seen from Tables 2 and 3, the copper nanoparticle-containing compositions of Examples 1 to 17 had excellent low-temperature bondability and excellent bondability after storage compared with the copper nanoparticle-containing compositions of Comparative Examples 1 to 7 not containing the monocarboxylic acid B and the silver nanoparticle-containing compositions of Comparative Examples 8 and 9, in which the silver nanoparticles AC7 and AC8 were used, finding that the copper nanoparticle-containing compositions of Examples 1 to 17 had excellent dispersion stability and storage stability, and the resulting bonded bodies had excellent 250°C heat resistance. From the above, according to the present invention, there can be provided a copper nanoparticle-containing composition with excellent dispersion stability and storage stability and excellent low-temperature bondability, there can be obtained a bonded body with high bonding strength by low-temperature firing at 200°C or higher and 300°C or lower even after storing the copper nanoparticle-containing composition for a certain period, and there can be further obtained a bonded body with excellent heat resistance in an environment of 250°C.

### Example 18

### Production of Electrically Conductive Structure

An electrically conductive structure was obtained according to the following method using the copper nanoparticle-containing composition 1 obtained in Example 1.

First, a stainless-steel metal mask (thickness: 50 µm) having a square opening of 10 mm x 10 mm was placed on a slide glass of 40 mm x 10 mm (total thickness: 1 mm), and the copper nanoparticle-containing composition 1 was applied onto the slide glass by stencil printing using a metal squeeze. Thereafter, the slide glass was placed on a Shamal Hot Plate (available from AS ONE Corporation, model No. HHP-441), covered with a separable flask to which a nitrogen gas pipe was connected, and heated at 250°C for 10 minutes while nitrogen was introduced at 5 L/min.

### Comparative Example 10

An electrically conductive structure was obtained in the same manner as in Example 18 except for using the copper nanoparticle-containing composition C6 obtained in Comparative Example 6 instead of the copper nanoparticle-containing composition 1 in Example 18.

The following evaluations were performed using the electrically conductive structures obtained by Example 18 and Comparative Examples 10. The results are shown in Table 4.

### Evaluations

### Low-Temperature Electrical Conductivity

The volume resistivity of each electrically conductive structure obtained in the example and comparative example was measured according to the following procedure.

First, the resulting electrically conductive structure was peeled off from the slide glass, and thickness t of the electrically conductive structure was measured using a micrometer.

Then, the above electrically conductive structure was subjected to a measurement using a resistivity meter (main body, Loresta-GP; four-point probe, PSP probe; both available from Mitsubishi Chemical Analytech Co., Ltd.). The thickness t of the electrically conductive structure measured above was input to the resistivity meter to display the volume resistivity. Other positions of the electrically conductive structure were also measured in the same manner, and the volume resistivity ρv was obtained by the arithmetic average of the three points in total. The electrically conductive structure with a lower numerical value of the volume resistivity ρv has excellent low-temperature electrical conductivity.

### Electrical Conductivity after Storage

Each copper nanoparticle-containing composition obtained in the example and comparative example was stored in an environment of 25°C and a humidity of 50% for 1 month, and then each electrically conductive structure was obtained in the same manner as in the production of the electrically conductive structure of Example 18. Then, the electrical conductivity was measured in the same manner as in the evaluation method of the low-temperature electrical conductivity described above. The electrically conductive structure with a lower numerical value of the volume resistivity ρv has excellent electrical conductivity after storage.

### [Table 4]

**Table 4**

| | | | | | Example | Comparative Example |
|---|---|---|---|---|---|---|
| | | | | | 18 | 10 |
| Type of copper nanoparticle-containing composition | | | | | 1 | C6 |
| | Dry powder of copper nanoparticles A | Type | | | A-1 | AC-6 |
| | | Blending amount (parts by mass) | | | 90 | 90 |
| | | Copper nanoparticles A | Type | | A1 | AC6 |
| Composition of copper nanoparticle-containing composition | | | Blending amount (parts by mass) | | 89.2 | 89.2 |
| | | Monocarboxylic acid B | Type | | 4-Oxopentanoic acid | Hexanoic acid |
| | | | Blending amount (parts by mass) | | 0.8 | 0.8 |
| | | | Number of carbons | | 5 | 6 |
| | | | Type of functional group or bond | | Ketonic carbonyl group | - |
| | Organic solvent C | | Type and blending amount (parts by mass) | Dipropylene glycol | 5 | 5 |
| | | | | Tetraethylene glycol | 5 | 5 |
| Evaluations | Low-temperature electrical conductivity (volume resistivity ρv (µΩ·cm)) | | | | 5 | 6 |
| | Electrical conductivity after storage (volume resistivity ρv (µΩ·cm) of copper nanoparticle-containing composition after storage at 25°C and humidity of 50%/1 month) | | | | 6 | Unable to be applied |

As can be seen from Table 4, the copper nanoparticle-containing composition of Example 18 had excellent low-temperature electrical conductivity and also had excellent electrical conductivity after storage compared with the copper nanoparticle-containing composition of Comparative Examples 10 not containing the monocarboxylic acid B, finding that the copper nanoparticle-containing composition of Example 18 had excellent dispersion stability and storage stability and also had excellent low-temperature electrical conductivity of the resulting electrically conductive structure. From the above, according to the present invention, there can also be provided a copper nanoparticle-containing composition with excellent dispersion stability and storage stability and excellent low-temperature electrical conductivity, and there can be obtained an electrically conductive structure with excellent low-temperature electrical conductivity even after storing the copper nanoparticle-containing composition for a certain period.

### Industrial Applicability

According to the present invention, there can be provided the copper nanoparticle-containing composition which exhibits excellent bondability and electrical conductivity when fired at 200°C or higher and 300°C or lower, which is a low temperature for bonding or wiring formation using metal fine particles, and is capable of producing a bonded body having high bonding strength and an electrically conductive structure with excellent electrical conductivity even after a certain period of storage. And the resulting bonded body exhibits excellent heat resistance when the bonded body is held in an environment of 250°C for a long period. There can be also provided the method for producing a bonded body using the copper nanoparticle-containing composition; and the bonded body or the electronic device using the copper nanoparticle-containing composition. **In** the present invention, copper nanoparticles are used, and thus an electronic device with reduced electromigration and high reliability can be provided.

## Claims

1. A copper nanoparticle-containing composition comprising copper nanoparticles A, a monocarboxylic acid B, and an organic solvent C, wherein
the monocarboxylic acid B has 5 or more and 12 or less carbons, and
the monocarboxylic acid B has one or more functional groups or bonds selected from the group consisting of a hydroxy group, a ketonic carbonyl group, and an ether bond.

2. The copper nanoparticle-containing composition according to claim 1, wherein the copper nanoparticles A have an average particle size of 150 nm or greater and 300 nm or less.

3. The copper nanoparticle-containing composition according to claim 1 or 2, wherein a ratio of a mass of the monocarboxylic acid B to a total mass of the copper nanoparticles A and the monocarboxylic acid B in the copper nanoparticle-containing composition is 0.003 or greater and 0.015 or less.

4. The copper nanoparticle-containing composition according to any one of claims 1 to 3, wherein the monocarboxylic acid B is one or more selected from the group consisting of 4-oxopentanoic acid, 5-oxohexanoic acid, 6-hydroxyhexanoic acid, 2-hydroxy-n-octanoic acid, 12-hydroxydodecanoic acid, 2-methoxybutanoic acid, and 3-ethoxypropionic acid.

5. The copper nanoparticle-containing composition according to any one of claims 1 to 4, wherein the organic solvent C includes one or more selected from the group consisting of a hydroxy group-containing compound including at least one hydroxy group in a molecule and an ester group-containing compound including at least one ester group in a molecule.

6. The copper nanoparticle-containing composition according to claim 5, wherein the hydroxy group-containing compound is one or more selected from the group consisting of a (poly)alkylene glycol and a (poly)alkylene glycol alkyl ether.

7. The copper nanoparticle-containing composition according to claim 5 or 6, wherein the ester group-containing compound is a (poly)alkylene glycol monoalkyl ether acetate.

8. The copper nanoparticle-containing composition according to any one of claims 1 to 7, further comprising metal microparticles D.

9. The copper nanoparticle-containing composition according to claim 8, wherein the metal microparticles D have an average particle size of 0.6 µm or greater and 8 µm or less.

10. A method for producing a bonded body, the method comprising a step of interposing the copper nanoparticle-containing composition described in any one of claims 1 to 9 between a plurality of members to be bonded and firing the composition, wherein
at least one of the members to be bonded is a metal plate, and
the step includes holding the metal plate at a temperature of 200°C or higher for 30 seconds or more to sinter at least the copper nanoparticles A.

11. The method for producing a bonded body according to claim 10, wherein a rate of decrease in bonding strength after holding the resulting bonded body at 250°C for 1000 hours is 20% or less.

12. A bonded body comprising a bonding layer interposed between a plurality of members to be bonded, wherein
the bonding layer includes a sintered body of the copper nanoparticle-containing composition described in any one of claims 1 to 9.

13. An electronic device comprising an electrically conductive structure including a sintered body of the copper nanoparticle-containing composition described in any one of claims 1 to 9.

14. Use of the copper nanoparticle-containing composition described in any one of claims 1 to 9, for bonding a plurality of members to be bonded.

15. Use of the copper nanoparticle-containing composition described in any one of claims 1 to 9, for an electrically conductive structure of an electronic device.
